# EUROPEAN PATENT SPECIFICATION

(11) **EP 3 226 658 B1**
(45) Date of publication and mention of the grant of the patent: **29.07.2020**
(21) Application number: 15863292.7
(22) Date of filing: 23.11.2015
(51) Int. Cl.: H05B 47/10

(54) **BALLASTED LED LAMP DRIVE POWER SUPPLY WITH VARIABLE POWER AND ENERGY SAVING**
STROMVERSORGUNG EINER VORGESCHALTETEN LED-LAMPE MIT VARIABLER LEISTUNG UND ENERGIEEINSPARUNG
BLOC D'ALIMENTATION D'ATTAQUE DE LAMPE À DEL BALLASTÉ À PUISSANCE VARIABLE ET À ÉCONOMIE D'ÉNERGIE

(30) Priority: 24.11.2014 CN 201410690461; 02.03.2015 CN 201510099002; 30.06.2015 CN 201510411375
(43) Date of publication of application: 04.10.2017
(73) Proprietor: Li, Shunhua, Wuhan, Hubei 430080 (CN)
(72) Inventor: Li, Shunhua, Wuhan, Hubei 430080 (CN)
(74) Representative: ZHAOffice SPRL
(86) International application number: PCT/CN2015/000807
(87) International publication number: WO 2016/082298

(56) References cited:
- CN-A- 101 730 358
- CN-A- 101 754 548
- CN-A- 103 379 689
- CN-U- 201 726 581
- CN-U- 203 340 369
- CN-U- 203 340 369
- US-A- 5 488 269
- US-A- 5 844 791
- US-A1- 2004 095 078
- US-A1- 2011 089 867
- US-A1- 2011 234 128

## Description

### Field of the Invention

The present invention relates to a drive power supply of a solid luminescent lamp, and in particular to a drive power supply of a ballast LED lamp with a variable power energy saving function.

### Background of the Invention

LED semiconductor lighting is a strategic emerging industry of the State Council to accelerate the cultivation and development. Recently, the Ministry of Science and Technology prepared the Semiconductor Lighting Technology Development "12th Five-Year" Special Planning*,* in the research of the application technology of key tasks of the special planning, the development of LED drive power supplies with high efficiency, low costs and high reliability is put forward. This illustrates the importance of the LED drive power supplies in the technical field of semiconductor lighting applications. As the service lives of LED lamps depend on the drive power supplies, more than 99% of lamp faults are caused by the drive power supplies, the service lives of LEDs are up to 50 000h or more, but the service lives of the assorted drive power supplies are only about 10 000h . Therefore, one of the key links affecting the application and promotion of LED lamp lighting devices is the problems of the drive power supplies. In view of the problems existing in the prior art, the Chinese patent application publication No. CN 102523647A, the Chinese patent application publication No. CN 202931605U, the Chinese patent application publication No. CN 203340369U, the Chinese patent application publication No. CN 203340329U and the like propose brand-new technical solutions of ballast LED lamp drive power supplies, and compared with the prior art, the drive power supplies have the significant characteristics of high efficiency (> 95%), high reliability, long service lives, low costs, and so on. In the application of high-power LED lamps, the temperature characteristic of the volt ampere characteristic of the LED lamps is generally -4mV/°C, the temperature characteristic of this volt ampere characteristic shows that even if the LED lamps are driven by constant current sources, in the case of a wide range of temperature changes (different territories, different seasons and temperature changes of the lamp at the beginning to stable work), the lamp power changes, and this is the technical problem that cannot be solved in the drive of the existing LED lamps. According to the inherent characteristics of the ballast LED lamp drive power supplies, when the lamp voltages are affected by the temperature to drop, the ballast current is increased due to the decrease of the load voltage, so that the lamp power does not decrease due to the decrease of the lamp voltage. When the lamp voltage is affected by the temperature and rises, the ballast current is decreased due to the rise of the load voltage, so that the lamp power does not increase due to the rise of the lamp voltage. The above facts show that the LED lamps do not require constant current sources, nor constant voltage sources, but ballast drive power supplies that can meet the requirements of the LED lamps. Accordingly, the ballast LED lamp drive power supplies will be the direction of development in the future.

In the Implementation Rules for Compulsory Certification of Lighting Electrical Appliances released by the China National Certification and Accreditation Administration Committee on July 16, 2014 and implemented on September 1, 2014, DC or AC electronic control devices for LED modules are included in the scope of certification for the first time, the certification is based on GB19510. 1, GB19510. 14, GB17743 and GB17625.1. With respect to the technical solutions of the LC ballast LED lamp drive power supplies disclosed by the Chinese patent application publication No. CN 102523647A, the Chinese patent application publication No. CN 202931605U, the Chinese patent application publication No. CN 203340369U, the Chinese patent application publication No. CN203675406U and the improvement solutions of patent number 201420719643. 7, EMC circuits need to be increased to meet the requirements in the terms of GB17743.

In the technical solutions of the ballast LED lamp drive power supplies disclosed by the Chinese patent application publication No. CN 203340329U, the Chinese patent application publication No. CN203675406U and the improvement solutions of patent number 201420719643. 7, a method of switching taps of inductive ballasts is utilized to realize wide voltage work of the inductive ballast LED lamp power supply devices, in the production process of the inductive ballast with this tap, the tap brings inconvenience to the production process and the assembly process, and the own loss is also increased.

United States Patent Application US2011/089867 discloses a high efficiency low power DC driver apparatus for powering a light source, with a capacitive divider circuit receiving an AC input and providing a divided AC output, a rectifier provide a DC output below ten watts, output terminals coupleable to one or more light sources, and a linear regulator coupled in series with the light source to regulate a drive current flowing through the series circuit. Between the input ends of the rectifier bridge a capacitor is present.

United States Patent US5,844,791 discloses a single-phase passive harmonic filter for one or more nonlinear loads. The filter improves the total system performance by drastically reducing the line side current harmonics generated by nonlinear loads. The filter includes single-phase integrated inductances with an appropriately placed tap across which is connected a tuning capacitor. The combination of the inductance up to the tap position and the tuning capacitor form a series tuned filter configuration while the remainder of the integrated inductance is used for harmonic attenuation. A shunt capacitor is employed for shunting higher order harmonic components. A single-phase passive voltage regulator provides the needed voltage bucking to prevent over voltage at the load terminals of the filter. The filter provides an alternate path for the harmonic currents generated by nonlinear loads. The over voltage caused by the increased capacitive reactance is controlled by either capacitor switching or by the use of the passive voltage regulator or a combination of the two. Capacitor switching is dependent upon load conditions.

United States Patent Application US2011/234128 discloses a power supply circuit having an input terminal for electrically connecting to an active wire of an AC power supply, an earth terminal for electrically connecting to a neutral or ground wire of the AC power supply, and a voltage decreasing unit. The voltage decreasing unit has an adjustable capacitor unit with adjustable capacitance for decreasing an AC voltage applied to the input terminal and an output terminal for outputting the decreased AC voltage. An electric motor is combined with the power supply circuit to form a motor device.

### Summary of the Invention

In view of the above defects in the prior art, the present invention provides a drive power supply of an LC ballast LED lamp that can meet the requirements terms in GB17743 without increasing an EMC circuit and can also realize a variable power energy saving function; and provides a drive power supply of an inductive ballast LED lamp that can realize wide voltage work without using a tap and can also realize a variable power energy saving function.

The invention is defined by the subject-matter of claim 1.

Preferably the inductive ballast (Lz) is an inductive ballast with an impedance range of greater than 52 ohms to smaller than 360 ohms.

Preferably connecting points, namely points P of the eighth capacitor (C8), the ninth capacitor (C9) and the tenth capacitor (C10) are connected with the D end through a twenty-ninth resistor (R29).

The drive circuit for driving the state conversion of the fifth switch (S5) is composed of a fifth integrated circuit (IC5), a thirtieth resistor (R30), a seventh transistor (Q7), a sixth diode (DI6) and a fifth relay (J5), one end of the thirtieth resistor (R30) is connected with the third pin of the fifth integrated circuit (IC5), the other end of the thirtieth resistor (R30) is connected with the base of the seventh transistor (Q7), the negative electrode of the sixth diode (DI6) and one end of the fifth relay (J5) are connected with the A end together, the positive electrode of the sixth diode (DI6) and one end of the fifth relay (J5) are connected with the collector of the seventh transistor (Q7) together, and the emitter of the seventh transistor (Q7) is connected with the N end.

The drive circuit of the sixth switch (S6) is composed of a sixth integrated circuit (IC6), a thirty-first resistor (R31), an eighth transistor (Q8), a seventh diode (DI7) and a sixth relay (J6), one end of the thirty-first resistor (R31) is connected with the third pin of the sixth integrated circuit (IC6), the other end of the thirty-first resistor (R31) is connected with the base of the eighth transistor (Q8), the negative electrode of the seventh diode (DI7) and one end of the sixth relay (J6) are connected with the A end together, the positive electrode of the seventh diode (DI7) and one end of the sixth relay (J6) are connected with the collector of the eighth transistor (Q8) together, and the emitter of the eighth transistor (Q8) is connected with the N end.

The drive circuit of the seventh switch (S7) is composed of a seventh integrated circuit (IC7), a thirty-second resistor (R32), a ninth transistor (Q9), an eighth diode (DI8) and a seventh relay (J7), one end of the thirty-second resistor (R32) is connected with the third pin of the seventh integrated circuit (IC7), the other end of the thirty-second resistor (R32) is connected with the base of the ninth transistor (Q9), the negative electrode of the eighth diode (DI8) and one end of the seventh relay (J7) are connected with the A end together, the positive electrode of the eighth diode (DI8) and one end of the seventh relay (J7) are connected with the collector of the ninth transistor (Q9) together, and the emitter of the ninth transistor (Q9) is connected with the N end.

Preferably the fifth switch (S5) is an electronic switch, the electronic switch is composed of a sixth thyristor (T6), a fourth optocoupler output end (OE4), a thirty-sixth resistor (R36) and a thirty-seventh resistor (R37), the T2 electrode of the sixth thyristor (T6) and one end of the thirty-sixth resistor (R36) are connected with one end of the eighth capacitor (C8), the other end of the thirty-sixth resistor (R36) is connected with one end of the fourth optocoupler output end (OE4), the other end of the fourth optocoupler output end (OE4) is connected with a G electrode of the sixth thyristor (T6) and one end of the thirty-seventh resistor (R37), and the other end of the thirty-seventh resistor (R37) and the T1 electrode of the sixth thyristor (T6) are connected with the N end together.

A drive circuit for driving the state conversion of the electronic switch is connected to the output ends, namely the A end and the N end of the DC power supply circuit, the drive circuit of the electronic switch is composed of a fifth integrated circuit (IC5), a thirtieth resistor (R30), a seventh transistor (Q7), a thirty-third resistor (R33) and a fourth optocoupler input end (IE4), one end of the thirtieth resistor (R30) is connected with the third pin of the fifth integrated circuit (IC5), the other end of the thirtieth resistor (R30) is connected with the base of the seventh transistor (Q7), the emitter of the seventh transistor (Q7) is connected with the N end, the collector of the seventh transistor (Q7) is connected with the negative electrode of the fourth optocoupler input end (IE4), the positive electrode of the fourth optocoupler input end (IE4) is connected with one end of the thirty-third resistor (R33), and the other end of the thirty-third resistor (R33) is connected with the A end.

The sixth switch (S6) is an electronic switch, the electronic switch is composed of a seventh thyristor (T2), a fifth optocoupler output end (OE5), a thirty-eighth resistor (R38) and a thirty-ninth resistor (R39), a T2 electrode of the seventh thyristor (T7) and one end of the thirty-eighth resistor (R38) are connected with one end of the ninth capacitor (C9), the other end of the thirty-eighth resistor (R38) is connected with one end of the fifth optocoupler output end (OE5), the other end of the fifth optocoupler output end (OE5) is connected with the G electrode of the seventh thyristor (T7) and one end of the thirty-ninth resistor (R39), and the other end of the thirty-ninth resistor (R39) and the T1 electrode of the seventh thyristor (T7) are connected with the N end together.

A drive circuit for driving the state conversion of the electronic switch is connected to the output ends, namely the A end and the N end of the DC power supply circuit, the drive circuit of the electronic switch is composed of a sixth integrated circuit (IC6), a thirty-first resistor (R31), an eighth transistor (Q8), a thirty-fourth resistor (R34) and a fifth optocoupler input end (IE5), one end of the thirty-first resistor (R31) is connected with the third pin of the sixth integrated circuit (IC6), the other end of the thirty-first resistor (R31) is connected with the base of the eighth transistor (Q8), the emitter of the eighth transistor (Q8) is connected with the N end, the collector of the eighth transistor (Q8) is connected with the negative electrode of the fifth optocoupler input end (IE5), the positive electrode of the fifth optocoupler input end (IE5) is connected with one end of the thirty-fourth resistor (R34), and the other end of the thirty-fourth resistor (R34) is connected with the A end.

The seventh switch (S7) is an electronic switch, the electronic switch is composed of an eighth thyristor (T8), a sixth optocoupler output end (OE6), a fortieth resistor (R40) and a forty-first resistor (R41), the T2 electrode of the eighth thyristor (T8) and one end of the fortieth resistor (R40) are connected with one end of the tenth capacitor (C10), the other end of the fortieth resistor (R40) is connected with one end of the sixth optocoupler output end (OE6), the other end of the sixth optocoupler output end (OE6) is connected with the G electrode of the eighth thyristor (T8) and one end of the forty-first resistor (R41), and the other end of the forty-first resistor (R41) and the T1 electrode of the eighth thyristor (T8) are connected with the N end together.

A drive circuit for driving the state conversion of the electronic switch is connected to the output ends, namely the A end and the N end of the DC power supply circuit, the drive circuit of the electronic switch is composed of a seventh integrated circuit (IC7), a thirty-second resistor (R32), a ninth transistor (Q9), a thirty-fifth resistor (R35) and a sixth optocoupler input end (IE6), one end of the thirty-second resistor (R32) is connected with the third pin of the seventh integrated circuit (IC7), the other end of the thirty-second resistor (R32) is connected with the base of the ninth transistor (Q9), the emitter of the ninth transistor (Q9) is connected with the N end, the collector of the ninth transistor (Q9) is connected with the negative electrode of the sixth optocoupler input end (IE6), the positive electrode of the sixth optocoupler input end (IE6) is connected with one end of the thirty-fifth resistor (R35), and the other end of the thirty-fifth resistor (R35) is connected with the A end.Preferably the emitters of the seventh transistor (Q7), the eighth transistor (Q8) and the ninth transistor (Q9) are connected with the positive electrode of a ninth thyristor (T9) and one end of a fiftieth resistor (R50), the other end of the fiftieth resistor (R50) is connected with the positive electrode of a thirteenth capacitor (C13) and the control electrode of the ninth thyristor (T9), and the negative electrode of the thirteenth capacitor (C13) and the negative electrode of the ninth thyristor (T9) are connected with the N end together.

Preferably the eleventh capacitor (C11) is connected to the input ends, namely the D and N ends of the bridge rectifier circuit through an eighth switch (S8), one end of the seventh switch (S7) is connected with a tenth capacitor (C10), and the other end of the seventh switch (S7) is connected with the connecting point, namely a point H of the eleventh capacitor (C11) and the eighth switch (S8).

A drive circuit for driving the state conversion of the eighth switch (S8) is connected to the input ends, namely the L and N ends of the power supply, the circuit is composed of an eighth integrated circuit (IC8), a forty-second resistor (R42), a forty-third resistor (R43), a forty-fourth resistor (R44), a forty-fifth resistor (R45), a forty-sixth resistor (R46), a forty-seventh resistor (R47), a forty-eighth resistor (R48), a forty-ninth resistor (R49), a twelfth capacitor (C12), a ninth diode (DI9), a tenth diode (DI10), a tenth thyristor (T10) and an eighth relay (J8), one end of the forty-second resistor (R42) is connected with the A end, the other end of the forty-second resistor (R42) is connected with the first pin of the eighth integrated circuit (IC8), one end of the forty-third resistor (R43), one end of the forty-fourth resistor (R44) and one end of the forty-fifth resistor (R45), the other end of the forty-third resistor (R43) is connected with the second pin of the eighth integrated circuit (IC8), the other end of the forty-fourth resistor (R44) is connected with the third pin of the eighth integrated circuit (IC8), the other end of the forty-fifth resistor (R45) is connected with the fourth pin of the eighth integrated circuit (IC8), the ninth diode (DI9), the forty-eighth resistor (R48) and the forty-ninth resistor (R49) are sequentially connected in series and are connected with the L end and the N end, the connecting site of the forty-eighth resistor (R48) and the forty-ninth resistor (R49) is connected with the fifth pin of the eighth integrated circuit (IC8), one end of the forty-sixth resistor (R46), one end of the forty-seventh resistor (R47) and one end of the twelfth capacitor (C12) are connected with the control electrode of the tenth thyristor (T10), the other end of the forty-sixth resistor (R46) is connected with the seventh pin of the eighth integrated circuit (IC8), the other end of the forty-seventh resistor (R47), the other end of the twelfth capacitor (C12) and the negative electrode of the tenth thyristor (T10) are connected with the N end, after the tenth diode (DI10) and the eighth relay (J8) are connected with each other in parallel, the negative electrode connecting point of the tenth diode (DI10) is connected with the L end, and the positive electrode connecting point of the tenth diode (DI10) is connected with the positive electrode of the tenth thyristor (T10).

The present invention has the advantages that after the technical solutions of the present invention are adopted, the drive power supply of the LC ballast LED lamp can satisfy the requirements of terms in GB17743 without increasing an EMC circuit, the circuit is simple, and the production cost is saved; and after the technical solutions of the present invention are adopted, an LC ballast type high-power LED lamp can realize variable power energy saving.

The present invention further has the advantages that, with respect to the inductive ballast LED lamp drive power supply, after the technical solutions of the present invention are adopted, as the inductive ballast has no tap, the efficiency of production and assembly are greatly improved, and the production cost is saved; and meanwhile the efficiency of the inductive ballast is higher and can be up to 95%, the efficiency of 95% is much higher than the certification standard of energy-saving evaluation values of non-isolation 92% and isolation 90% in the *Technical Specification For Energy Saving Certification of AC Electronic Control Device For LED Module.* As the output voltage of a bridge rectification bridge arm of the drive power supply of the inductive ballast LED lamp of the present invention is a square wave, when a high-power factor in which the circuit power factor is 0.97 is compensated by capacitance, the harmonic content also completely satisfies corresponding harmonic requirements in GB 17625.1. Since the control circuit of the present invention is not in the main circuit (small current is controlled), the requirements for the control circuit can be reduced. After the technical solutions of the present invention are adopted, an inductive ballast high-power LED lamp can realize variable power energy saving.

### Brief Description of the Drawings

Fig. 1 to Fig. 3 show a circuit structure diagram and a schematic diagram of a local circuit structure of an LC ballast LED lamp of the prior art.
Fig. 4 shows a schematic diagram of a local circuit structure of a drive power supply of an LC ballast LED lamp as examples for better understanding.
Fig. 5 shows an EMC test result diagram of a drive power supply of an LC ballast LED lamp of the prior art.
Fig. 6 shows an EMC test result diagram of a drive power supply of an LC ballast LED lamp..
Fig. 7, Fig. 8, Fig. 9, Fig. 10, Fig. 11, Fig. 12, Fig. 13 and Fig. 14 show schematic diagrams of a local circuit structure of a drive power supply of an LC ballast LED lamp as examples for better understanding.
Fig. 15 and Fig. 16 show a circuit structure diagram and a schematic diagram of a local circuit structure of a drive power supply of an inductive ballast LED lamp as examples for better understanding .
Fig. 17, Fig. 18, Fig. 19, Fig. 20, Fig. 21, Fig. 22, Fig. 23 and Fig. 24 show circuit structure diagrams and schematic diagrams of a local circuit structure of an inductive ballast drive power supply for a LED lamp of the present invention as claimed.

### Detailed Description of the Embodiments

The present invention is further described below in detail in combination with the accompanying drawings.

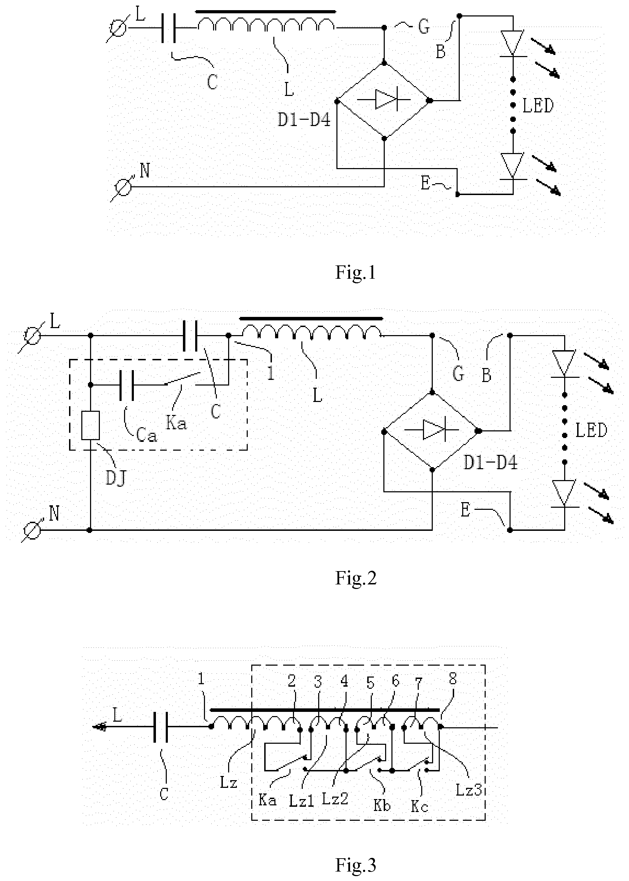

Fig. 1 is a circuit structure of a first drive power supply of an LC ballast LED lamp disclosed by the Chinese patent application publication No. CN 102523647A. Fig. 2 is an improved circuit structure diagram of the drive power supply of an LC ballast LED lamp in Fig. 1 disclosed by the Chinese patent application publication No. CN 202931605U. Fig. 3 is an improved circuit diagram of Fig. 2 disclosed by the Chinese patent application publication No. CN CN203340369U.

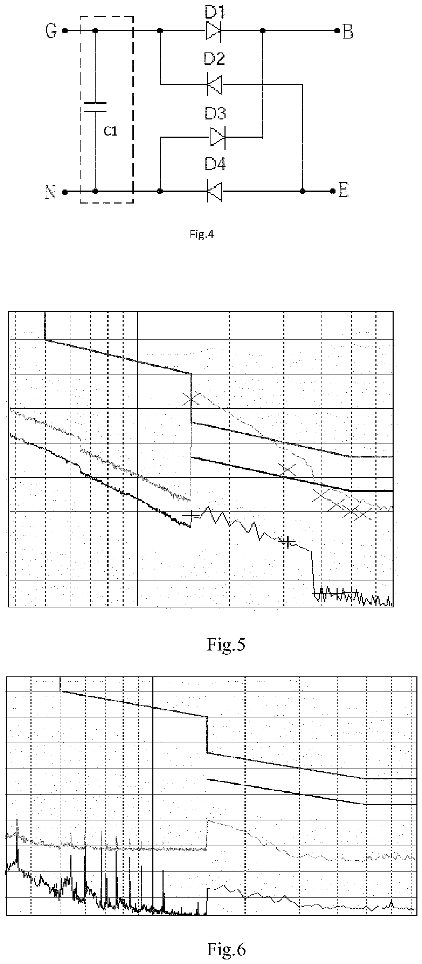

Fig. 4 is a schematic diagram of a circuit structure as an example for better understanding , in which input ends, namely G and N ends of a bridge rectifier circuit of a drive power supply of an LC ballast LED lamp are connected with a capacitor C1, and a main loop of the circuit of the drive power supply of the LC ballast LED lamp is composed of an inductor L and a capacitor C, so the resonance of the inductor and the capacitor will make a power supply terminal disturbance voltage exceed a limit value specified in GB17743. Due to the access of the capacitor C1, the disturbance voltage value of the power supply terminal of the circuit of the drive power supply of the LC ballast LED lamp can be greatly reduced. Fig. 5 is an EMC test result diagram of the drive power supply of the LC ballast LED lamp in the prior art, and as can be seen from the figure, the disturbance voltage value at the position of 0.15 MHz exceeds the limit value specified in GB17743 for more than 10 dB. Fig. 6 is an EMC test result diagram of the drive power supply of the LC ballast LED lamp as an example for better understanding, as can be seen from the figure that the disturbance voltage value at the position of 0.15 MHz is lower than the limit value specified in GB17743 for more than 25 dB, which completely satisfies the technical requirements of 3C certification for the EMC of the drive power supply of the LC ballast LED. With respect to the main circuit in Fig. 4 of the embodiment as an example for better understanding, the technical effect is illustrated by taking a 144 W (nominal value) and 700 mA (nominal value) lamp driven by the LC ballast drive power supply in the present invention as an example, and the capacitor C1 in the figures is preferably 0.1-0.12µF.

It has been proved that in the technical solution of Fig. 4, the access of the capacitor C1 will reduce the current of the drive circuit of the LC ballast LED lamp. To meet the design (the design principle is to use the lamp voltage at 25 degrees as the working voltage of the lamp, and the impedance of an LC ballast can meet the current requirements of the LED lamp) requirements, the circuit can be adjusted accordingly (for example, the capacitance C or the inductance L is increased, so that the total impedance of the LC ballast circuit is reduced to compensate the reduction of the current caused by the access of the capacitor C1). According to the characteristic that the original circuit current can be changed after the capacitor C1 is connected to the input end of the bridge rectifier circuit, the access capacitor can be controlled, so that the lamp can work normally under a wide voltage. For the technical solutions of wide voltage work of the drive circuit of the LC ballast LED lamp disclosed by the CN 202931605U (Fig. 2) and the CN 203340369U (Fig. 3), in the case of the same functions, the overall reliability of the drive circuit of the LC ballast LED lamp can be improved, and the cost can be saved.

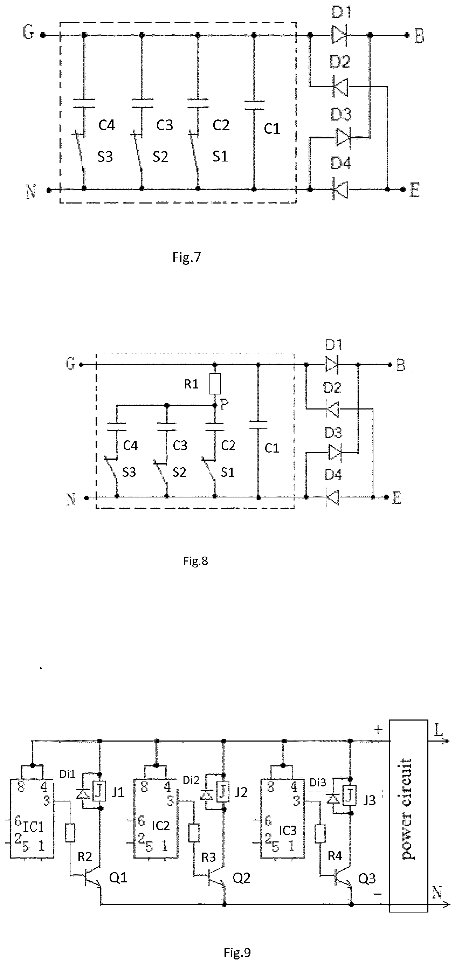

Fig. 7 is a schematic diagram of another circuit structure as an example for better understanding, and a series circuit of a capacitor C2 and a switch S1, a series circuit of a capacitor C3 and a switch S2, and a series circuit of a capacitor C4 and a switch S3 are further connected to the input ends, namely the G and N ends, of the bridge rectifier circuit in the figure.

Fig. 8 is a schematic diagram of another circuit structure of an example for better understanding , one of the ends of the capacitor C2, the capacitor C3 and the capacitor C4 is connected with the G end through a resistor R1 in the figure. The resistor R1 in the figure relieves the impact of the charging current to the switches when the capacitor C2, the capacitor C3 and the capacitor C4 work. It can be seen from the working properties of the capacitors that, the initial instantaneous current of capacitive charging is very large, the resistor R1 in the figure can limit the instantaneous high current and relieve the impact of the charging current to the switches.

Fig. 9 is a schematic diagram of another circuit structure of an example for better understanding. The figure shows a drive circuit of the switch S1 as shown in Fig. 7, the drive circuit is composed of an integrated circuit IC1, a resistor R2, a transistor Q1, a diode DI1 and a relay J1, and one end of the resistor R2 is connected with the third pin of the integrated circuit IC1, the other end of the resistor R2 is connected with a base of the transistor Q1, a negative electrode of the diode DI1 and one end of the relay J1 are connected with an output + end of a power supply circuit together, and the present case of the power supply circuit adopts the power supply circuit used in the CN 202931605U or CN 203340369U. A positive electrode of the diode DI1 and one end of the relay J1 are connected with a collector of the transistor Q1 together, and an emitter of the transistor Q1 is connected with the N end.

The drive circuit of the switch S2 in Fig. 7 is also shown. The drive circuit is composed of an integrated circuit IC2, a resistor R3, a transistor Q2, a diode DI2 and a relay J2, one end of the resistor R3 is connected with the third pin of the integrated circuit IC2, the other end of the resistor R3 is connected with the base of the transistor Q2, the negative electrode of the diode DI2 and one end of the relay J2 are connected with the output + end of the power supply circuit together, the positive electrode of the diode DI2 and one end of the relay J2 are connected with the collector of the transistor Q2, and the emitter of the transistor Q2 is connected with the N end.

Fig. 9 further shows the drive circuit of the switch S3 in Fig. 7, the drive circuit is composed of an integrated circuit IC3, a resistor R4, a transistor Q3, a diode DI3 and a relay J3, one end of the resistor R4 is connected with the third pin of the integrated circuit IC3, the other end of the resistor R4 is connected with the base of the transistor Q3, the negative electrode of the diode DI3 and one end of the relay J3 are connected with the output + end of the power supply circuit together, the positive electrode of the diode DI3 and one end of the relay J3 are connected with the collector of the transistor Q3, and the emitter of the transistor Q3 is connected with the N end.

According to the circuits as shown in Fig. 7, Fig. 8 and Fig. 9, according to the property that after the capacitors are connected to the input ends of the bridge rectifier circuit of the drive circuit of the LC ballast LED lamp, the original circuit current can be changed, the LED lamp can normally work under the wide voltage by means of the LC ballast drive.

The circuit diagram of Fig. 7 is similar in function to the technical solution of Fig. 2 or Fig. 3 except that the series circuits of the capacitor Ca and the switch Ka, the capacitor Cb and the switch Kb, the capacitor Cc and the switch Kc, and the capacitor Cd and the switch Kd in Fig. 2 are connected to both ends of a working capacitor C, but the series circuit of the capacitor C2 and the switch S1, the capacitor C3 and the switch S2, and the capacitor C4 and the switch S3 of Fig. 7 of the present invention are connected to the input ends, namely the G and N ends of the bridge rectifier circuit. Since the drive circuit of the LC ballast LED lamp is capacitive, the larger the capacity of the working capacitor on the road is, the greater the current of the LC ballast circuit is. It can be seen from the logical relationship of the integrated circuit chip and Fig. 2 in the CN202931605U that, when the input voltage becomes low, the switch Ka or the switch Kb or the switch Kc or the switch Kd is turned on, that is to say, in the series circuits of the capacitors and the switches, the states of the switches are set to be normally open (See Fig. 2). While the series circuits of the capacitor C2 and the switch S1, the capacitor C3 and the switch S2, and the capacitor C4 and the switch S3 of the present invention are connected to the input ends, namely the G and N ends of the bridge rectifier circuit, the series circuits of the capacitors and the switches have nothing to do with the nature of the drive current of the LC ballast LED lamp, and after the capacitors are connected to the input ends of the bridge rectifier circuit, the original circuit current can be reduced. It can be seen from the logical relationship of the integrated circuit chip and the circuit in Fig. 7 of the present invention that, when the input voltage becomes low, the switch 11 or the switch 12 or the switch 13 is turned off, that is to say, in the series circuits of the capacitors and the switches, the states of the switches are set to be normally closed (See Fig. 7). The technical solution of the Fig. 7 of the present invention has the advantages that the working voltages of the capacitor C2, the capacitor C3 and the capacitor C4 are lower than the working voltages of the capacitors in the technical solution of Fig. 2 disclosed by the CN202931605U, and the fluctuation of the working voltages of the capacitor C2, the capacitor C3 and the capacitor C4 is small (as can be seen from the figure, the working voltages at both ends of the capacitor is close to the load voltage), that is, the working voltages are stable, thus improving the reliability of the whole circuit.

Fig. 9 shows the drive circuits of the switch S1, the switch S2, and the switch S3, the peripheral circuits of the integrated circuits IC1, IC2 and IC3 in the figure can adopt the prior art disclosed by CN203675406U and the technical solutions recorded in the Chinese patent number 201420719643.7. A DC power supply is the power supply circuit used in the CN203675406U or the CN203340369U. In the figure, when the logic circuit of the third pin is 1, the R2 and the transistor Q1 connected to the output end, namely the third pin, of the integrated circuit IC1 turn on the transistor Q1, the relay J1 in the figure is powered and is turned on to drive the switch S1 to act, the switch S1 changes from a normally closed state into a normally open state, the C2 is disconnected from the circuit, and the current of the drive circuit of the LC ballast LED lamp is increased. When the relay J1 loses power, DI1 eliminates the induced potential to protect the transistor Q1. In the figure, when the logic circuit of the third pin is 1, the R3 and the transistor Q2 connected to the output end, namely the third pin, of the integrated circuit IC2 turn on the transistor Q2, the relay J2 in the figure is powered and is turned on to drive the switch S2 to act, the switch S2 changes from the normally closed state into the normally open state, C3 is disconnected from the circuit, and the current of the drive circuit of the LC ballast LED lamp is increased. When the relay J2 loses power, DI2 eliminates the induced potential to protect the transistor Q2. In the figure, when the logic circuit of the third pin is 1, the R4 and the transistor Q3 connected to the output end, namely the third pin, of the integrated circuit IC3 turn on the transistor Q3, the relay J3 in the figure is powered and is turned on to drive the switch S3 to act, the switch S3 changes from the normally closed state into the normally open state, the C4 is disconnected from the circuit, and the current of the drive circuit of the LC ballast LED lamp is increased. When the relay J3 loses power, the DI3 eliminates the induced potential to protect the transistor Q2.

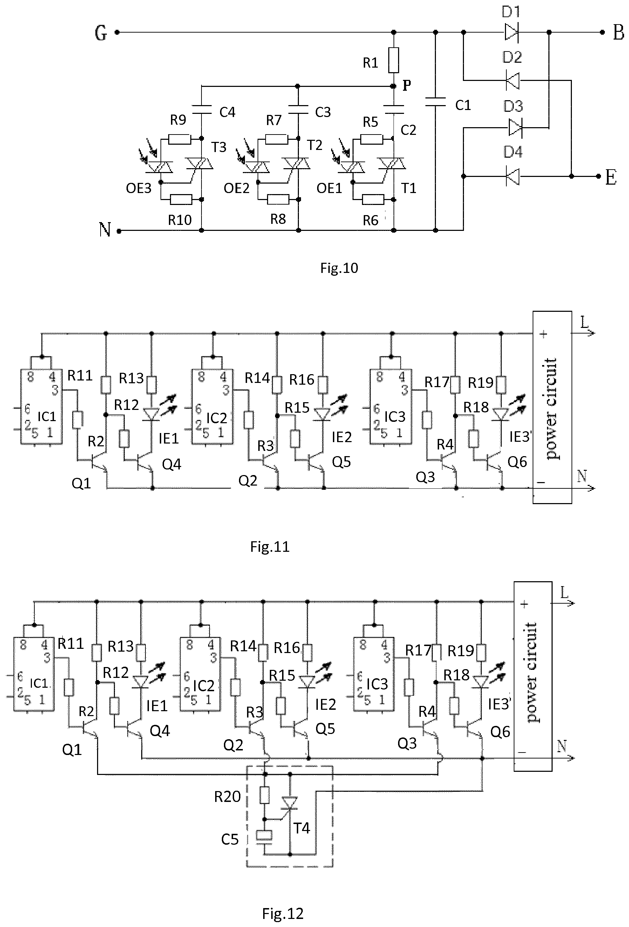

The circuit of the electronic switches as shown in Fig. 10 replaces the switch S1, the switch S2 and the switch S3 in Fig. 7. The electronic switch replacing the switch S1 is composed of a thyristor T1, an optocoupler output end OE1, a resistor R5 and a resistor R6, a T2 electrode of the thyristor T1 and one end of the resistor R5 are connected with one end of the capacitor C2, the other end of the resistor R5 is connected with one end of the optocoupler output end OE1, the other end of the optocoupler output end OE1 is connected with a G electrode of the thyristor T1 and one end of the resistor R6, and the other end of the resistor R6 and the T1 electrode of the thyristor T1 are connected with the N end together.

The electronic switch replacing the switch S2 in the figure is composed of a thyristor T2, an optocoupler output end OE2, a resistor R7 and a resistor R8, the T2 electrode of the thyristor T2 and one end of the resistor R7 are connected with one end of the capacitor C3, the other end of the resistor R7 is connected with one end of the optocoupler output end OE2, the other end of the optocoupler output end OE2 is connected with the G electrode of the thyristor T2 and one end of the resistor R8, and the other end of the resistor R8 and the T1 electrode of the thyristor T2 are connected with the N end together.

The electronic switch replacing the switch S3 in the figure is composed of a thyristor T3, an optocoupler output end OE3, a resistor R9 and a resistor R10, the T2 electrode of the thyristor T3 and one end of the resistor R9 are connected with one end of the capacitor C4, the other end of the resistor R9 is connected with one end of the optocoupler output end OE3, the other end of the optocoupler output end OE3 is connected with the G electrode of the thyristor T3 and one end of the resistor R10, and the other end of the resistor R10 and the T1 electrode of the thyristor T3 are connected with the N end together.

Drive circuits for driving the state conversion of the electronic switch replacing the switch S1, the electronic switch replacing the switch S2 and the electronic switch replacing the switch S3 are connected to the output ends of the power supply circuit are shown in Fig. 11.

The drive circuit of the electronic switch replacing the switch S1 in the figure is composed of an integrated circuit IC1, a resistor R2, a transistor Q1, a resistor R11, a resistor R12, a transistor Q4, an optocoupler input end IE1 and a resistor R13, one end of the resistor R2 is connected with the third pin of the integrated circuit IC1, the other end of the resistor R2 is connected with the base of the transistor Q1, the emitter of the transistor Q1 is connected with the N end, the collector of the transistor Q1 is connected with one end of the resistor R11 and one end of the resistor R12, the other end of the resistor R11 is connected with the output + end of the power supply circuit, the other end of the resistor R12 is connected with the base of the transistor Q4, the emitter of the transistor Q4 is connected with the N end, the collector of the transistor Q4 is connected with the negative electrode of the optocoupler input end IE1, the positive electrode of the optocoupler input end IE1 is connected with one end of the resistor R13, and the other end of the resistor R13 is connected with the output + end of the power supply circuit.

The drive circuit of the electronic switch replacing the switch S2 in the figure is composed of an integrated circuit IC2, a resistor R3, a transistor Q2, a resistor R14, a resistor R15, a transistor Q5, an optocoupler input end IE2 and a resistor R16, one end of the resistor R3 is connected with the third pin of the integrated circuit IC2, the other end of the resistor R3 is connected with the base of the transistor Q2, the emitter of the transistor Q2 is connected with the N end, the collector of the transistor Q2 is connected with one end of the resistor R14 and one end of the resistor R15, the other end of the resistor R14 is connected with the output + end of the power supply circuit, the other end of the resistor R15 is connected with the base of the transistor Q5, the emitter of the transistor Q5 is connected with the N end, the collector of the transistor Q5 is connected with the negative electrode of the optocoupler input end IE2, the positive electrode of the optocoupler input end IE2 is connected with one end of the resistor R16, and the other end of the resistor R16 is connected with the output + end of the power supply circuit.

The drive circuit of the electronic switch replacing the switch S3 in the figure is composed of an integrated circuit IC3, a resistor R4, a transistor Q3, a resistor R17, a resistor R18, a transistor Q6, an optocoupler input end IE3 and a resistor R19, one end of the resistor R4 is connected with the third pin of the integrated circuit IC3, the other end of the resistor R4 is connected with the base of the transistor Q3, the emitter of the transistor Q3 is connected with the N end, the collector of the transistor Q3 is connected with one end of the resistor R17 and one end of the resistor R18, the other end of the resistor R17 is connected with the output + end of the power supply circuit, the other end of the resistor R18 is connected with the base of the transistor Q6, the emitter of the transistor Q6 is connected with the N end, the collector of the transistor Q6 is connected with the negative electrode of the optocoupler input end IE3, the positive electrode of the optocoupler input end IE3 is connected with one end of the resistor R19, and the other end of the resistor R19 is connected with the output + end of the power supply circuit.

In Fig. 10 and Fig. 11, the switch circuit composed of the thyristor T1, the optocoupler output end OE1, the resistor R5 and the resistor R6 is controlled by the optocoupler input end IE1, and the working condition of the optocoupler input end IE1 is controlled by the integrated circuit IC1, the resistor R2, the transistor Q1, the resistor R11, the resistor R12, the transistor Q4 and the resistor R13. Since the electronic switch composed of the thyristor T1, the optocoupler output end OE1, the resistor R5 and the resistor R6 replaces the switch S1 to work in the circuit, and the working state of the S1 is set to be normally closed, therefore, the electronic switch composed of the thyristor T1, the optocoupler output end OE1, the resistor R5 and the resistor R6 should be in a turn-on working state when the output of the IC1 is zero. The circuit composed of the resistor R2, the transistor Q1, the resistor R11, the resistor R12, the transistor Q4, the optocoupler input end IE1 and the resistor R13 satisfies the requirements of turning on the electronic switch when the output of the IC1 is zero. The working principle is as follows: when the output of the IC1 is zero, the Q1 is disconnected, the collector is at a high level, the R11 and the R12 provide base current necessary for the saturated conduction of the Q4, the saturated conduction of the Q4 is realized, and the R13 limits the working current of the optocoupler input end IE1 within a normal working range. As the optocoupler input end IE1 works, the optocoupler output end OE1 works, and the thyristor T1 works.

The switch circuit composed of the thyristor T2, the optocoupler output end OE2, the resistor R7 and the resistor R8 is controlled by the optocoupler input end IE2, and the working condition of the optocoupler input end IE2 is controlled by the integrated circuit IC2, the resistor R3, the transistor Q2, the resistor R14, the resistor R15, the transistor Q5 and the resistor R16. Since the electronic switch composed of the thyristor T2, the optocoupler output end OE2, the resistor R7 and the resistor R8 replaces the switch S2 to work in the circuit, and the working state of the S2 is set to be normally closed, therefore, the electronic switch composed of the thyristor T2, the optocoupler output end OE2, the resistor R7 and the resistor R8 should be in the turn-on working state when the output of the IC2 is zero. The circuit composed of the resistor R3, the transistor Q2, the resistor R14, the resistor R15, the transistor Q5, the optocoupler input end IE2 and the resistor R16 satisfies the requirements of turning on the electronic switch when the output of the IC2 is zero. The working principle is as follows: when the output of the IC2 is zero, the Q2 is disconnected, the collector is at the high level, the R14 and the R15 provide base current necessary for the saturated conduction of the Q5, the saturated conduction of the Q5 is realized, and the R16 limits the working current of the optocoupler input end IE2 within a normal working range. As the optocoupler input end IE2 works, the optocoupler output end OE2 works, and the thyristor T2 works.

The switch circuit composed of the thyristor T3, the optocoupler output end OE3, the resistor R9 and the resistor R10 is controlled by the optocoupler input end IE3, and the working condition of the optocoupler input end IE3 is controlled by the integrated circuit IC3, the resistor R4, the transistor Q3, the resistor R17, the resistor R18, the transistor Q6 and the resistor R19. Since the electronic switch composed of the thyristor T3, the optocoupler output end OE3, the resistor R9 and the resistor R10 replaces the switch S3 to work in the circuit, and the working state of the S3 is set to be normally closed, therefore, the electronic switch composed of the thyristor T3, the optocoupler output end OE3, the resistor R9 and the resistor R10 should be in the turn-on working state when the output of the IC3 is zero. The circuit composed of the resistor R4, the transistor Q3, the resistor R17, the resistor R18, the transistor Q6, the optocoupler input end IE3 and the resistor R19 satisfies the requirements of turning on the electronic switch when the output of the IC3 is zero. The working principle is as follows: when the output of the IC3 is zero, the Q3 is disconnected, the collector is at the high level, the R17 and the R18 provide base current necessary for the saturated conduction of the Q6, the saturated conduction of the Q6 is realized, and the R19 limits the working current of the optocoupler input end IE3 within the normal working range. As the optocoupler input end IE3 works, the optocoupler output end OE3 works, and the thyristor T3 works.

The circuit as shown in Fig. 7, Fig. 8, Fig. 9, Fig. 10 and Fig. 11 is the same as the main circuit in Fig. 4, and the technical solution of these examples for better understanding is illustrated by taking the 144 W (nominal value) and 700 mA (nominal value) lamp driven by the LC ballast drive LED lamp circuit in the present invention as an example. In the figures, by considering the loss after the access of the resistors, in the present example, the resistors are preferably 10-20 Ω, the C2 is preferably 0.15µF, the C3 is preferably 0.22µF, the C4 is preferably 0.33µF, and the C1 is preferably 0.1µF. At a rated voltage (220V) of the circuit, the lamp current is 0.66A and the lamp power is 145W. The trigger voltage TR of the IC3 in the present example is set to be greater than 220V, and is preferably 222V in the present example. The switch S7 is turned off at this time. When the supply voltage rises to the threshold voltage TH, 227V is preferred in the present example, the switch S7 is closed (0.73A before closing), and the lamp current is decreased (0.65A after closing). When the supply voltage drops to the trigger voltage TR 222V, the switch S7 is turned off again (0.61A before turn-off and 0.69A after turn-off). In the present example, the threshold voltage TH of the IC1 and the IC 12 is set to be smaller than 220V. The IC1 and IC2 form two-stage low voltage regulation, when the supply voltage drops to the trigger voltage TR of the IC2, 213V is preferred in the present example, the switch S6 is turned off (0.6A before turn-off), and the lamp current is increased (0.67A after turn-off). When the supply voltage rises to the threshold voltage TH of the IC2, 218V is preferred in the present example, the switch S6 is closed (0.72A before closing), and the lamp current is decreased (0.64A after closing). When the supply voltage drops to the trigger voltage TR of the IC1, 205V is preferred in the present example, the switch K is turned off (0.6A before turn-off), and the lamp current is increased (0.67A after turn-off). When the supply voltage rises to the threshold voltage TH of the IC1, 211V is preferred in the present example, the switch K1 is closed (0.73A before closing), and the lamp current is decreased (0.66A after closing). When the supply voltage is 202V, the lamp current is 0.64A. When the supply voltage is 233.4V, the lamp current is 0.71A. By changing the states of the switches S5, S6 and S7, the change of the lamp current is controlled within a small range when the input voltage changes. Of course, more switches can be set to meet a wider input voltage range of the lamp if necessary.

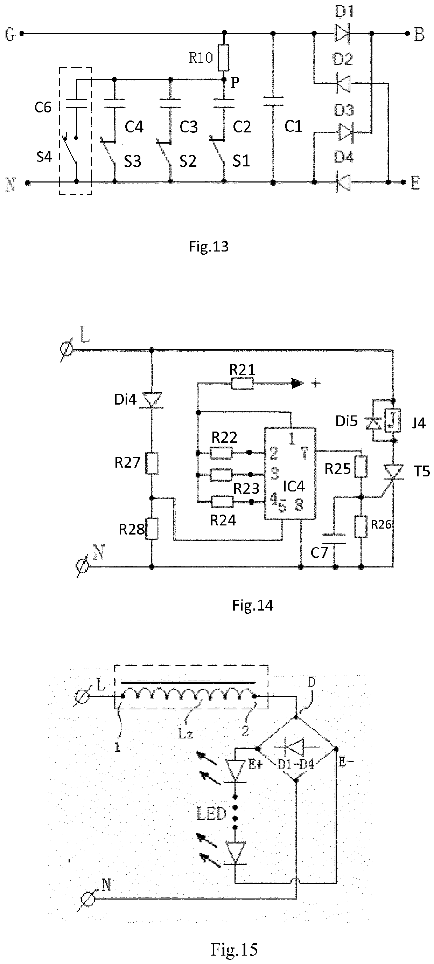

Fig. 12 is a schematic diagram of a local circuit structure of the drive power supply of the LC ballast LED lamp of the present invention. In the figure, the emitters of the transistor Q1, the transistor Q2 and the transistor Q3 are connected with the positive electrode of a thyristor T4 and one end of a resistor R20, the other end of the resistor R20 is connected with the positive electrode of a capacitor C5 and a control electrode of the thyristor T4, and the negative electrode of the capacitor C5 and the negative electrode of the thyristor T4 are connected with the N end together. The functions of the three elements, namely the thyristor T4, the resistor R20 and the capacitor C5 are to prevent the Q1, the Q2 and the Q3 from working in the several seconds before the startup of the drive circuit of the LC ballast LED lamp. As voltage controlled devices are arranged at the input ends of the integrated circuits IC1, IC2 and IC3 used in the technical solution of the present invention, the sampling resistance at the input end of the power supply is very large, the voltage at both ends of a filter capacitor (i.e., C3 in Fig. 4 of the CN203675406U and C in Fig. 3 in the patent number 201420719643.7) rises very slowly after startup, the voltage at the second pin of the integrated circuit IC is lower than the trigger voltage TR, and the logic circuit of the output end is 1 (high level). It can be seen from Fig. 9, Fig. 10, Fig. 11 and Fig. 12 that the capacitors C2, C3 and C4 connected to the G and N ends (through R1) are cut off, and that the current of the drive power supply of the LC ballast LED lamp is increased (greater than the set working current). The high current during the startup brings shortcomings to the drive power supply of the LC ballast LED lamp. In Fig. 13, the functions of the three elements, namely the thyristor T4, the resistor R20 and the capacitor C5 are to prevent the Q1, the Q2 and the Q3 from working for several seconds before the startup of the drive circuit of the LC ballast LED lamp so as to ensure that the startup current of the drive power supply of the LC ballast LED lamp is smaller than the set working current. The working principle is as follows: the third pins of the IC1, the IC2 and the IC3 are high levels after the startup, but because the thyristor T4 does not meet the turn-on conditions at this time, the collectors of the Q1, the Q2 and the Q3 are high levels, and all of the Q4, the Q5 and the Q6 are turned on. The electronic switch works, the capacitors C2, C3 and C4 are connected to the G and N ends, and the current of the drive power supply of the LC ballast LED lamp is smaller than the set working current at the moment. When the capacitor C5 charges the C5 through the following three branches: A-the third pin of the IC1-R2-an emitter junction of the Q1-R20, A-the third pin of the IC2-R3-the emitter junction of the Q2-R20, and A-the third pin of the IC2-R3-the emitter junction of the Q2-R20, when the voltage on the C5 rises to trigger the turn-on of the thyristor T4, the circuit returns to the designed normal working mode. The time from the startup to the triggered turn-on of the thyristor T4 can be set as 1-2 seconds. The R20 is preferably 200KΩ, and the C5 is preferably 100µF.

As the functions of Fig. 9 are the same as those of Fig. 11, the technical solution of Fig. 12 is also applicable to Fig. 9, namely delayed turn-on of the Q1, the Q2 and the Q3, and the delayed turn-off of the S1, the S2 and the S3.

Fig. 13 and Fig. 14 are schematic diagrams of the local circuit structure of the drive power supply of the LC ballast LED lamp of examples for a better understanding. In the figures, a series circuit of a timing variable power capacitor C6 and a switch S4 is connected between the P point and the N end. A drive circuit for periodically driving the state conversion of the switch S4 is connected to the input ends, namely L and N ends, of the power supply. The circuit is composed of an integrated circuit IC4, a resistor R21, a resistor R22, a resistor R23, a resistor R24, a resistor R25, a resistor R26, a resistor R27, a resistor R28, a capacitor C7, a diode DI4, a diode DI5, a thyristor T5 and a relay J4, one end of the resistor R21 is connected with the output + end of the power supply circuit, the other end of the resistor R21 is connected with the first pin of the integrated circuit IC4, one end of the resistor R22, one end of the resistor R23 and one end of the resistor R24, the other end of the resistor R22 is connected with the second pin of the integrated circuit IC4, the other end of the resistor R23 is connected with the third pin of the integrated circuit IC4, the other end of the resistor R24 is connected with the fourth pin of the integrated circuit IC4, the diode DI4, the resistor R27 and the resistor R28 are sequentially connected with in series and is connected with the L end and the N end, the connecting site of the resistor R27 and the resistor R28 is connected with the fifth pin of the integrated circuit IC4, one end of the resistor R25, one end of the resistor R26 and one end of the capacitor C7 are connected with the control electrode of the thyristor T5, the other end of the resistor R25 is connected with the seventh pin of the integrated circuit IC4, the other end of the resistor R26, the other end of the capacitor C7 and the negative electrode of the thyristor T5 are connected with the N end, after the diode DI5 and the relay J4 are connected in parallel with each other, a negative electrode connecting point of the diode DI5 is connected with the L end, and a positive electrode connecting point of the diode DI5 is connected with the positive electrode of the thyristor T5.

In Fig. 13, after the capacitor C6 is connected in series with the switch S4 (via the R1) and is connected to the G and N ends. The switch S4 is set to be in a normally open condition. Fig. 15 shows the timing drive circuit of the switch S4, the timing circuit of the IC4 is preferably a PIC singlechip 12F508. The first pin is a power supply positive electrode, and as the supply voltage of the 12F508 is 2-5.5V, a resistor R21 is needed for limiting the current and reducing the voltage of the 12F508. The eighth pin is a power supply negative electrode, the seventh pin is the output end, the R25 and the R26 are the trigger resistors of the T5, and the C7 and the R26 have anti-interference and temperature compensation functions. The second pin, the third pin, the fourth pin, the R22, the R23 and the R24 constitute a time setting circuit. The DI4, the R27 and the R28 are power supply sampling circuits. The DI5 eliminates induced potential to protect the thyristor T5 in the case of power down of the relay J4. In the circuit of the 144W (nominal value) and 700mA LED lamp driven by the LC ballast drive power supply as shown in Fig. 4, Fig. 7, Fig. 8, Fig. 9, Fig. 10, Fig. 11 and Fig. 13, the C6 is preferably µF. When the time reaches the set time, the seventh pin of the 12F508 outputs high level, and the circuit changes from the working state in which the input voltage is 220V, the lamp current is 0.66A and the lamp power is 145W into an energy-saving working state in which the input voltage is 220V, the lamp current is 0.48A and the lamp power is 101W.

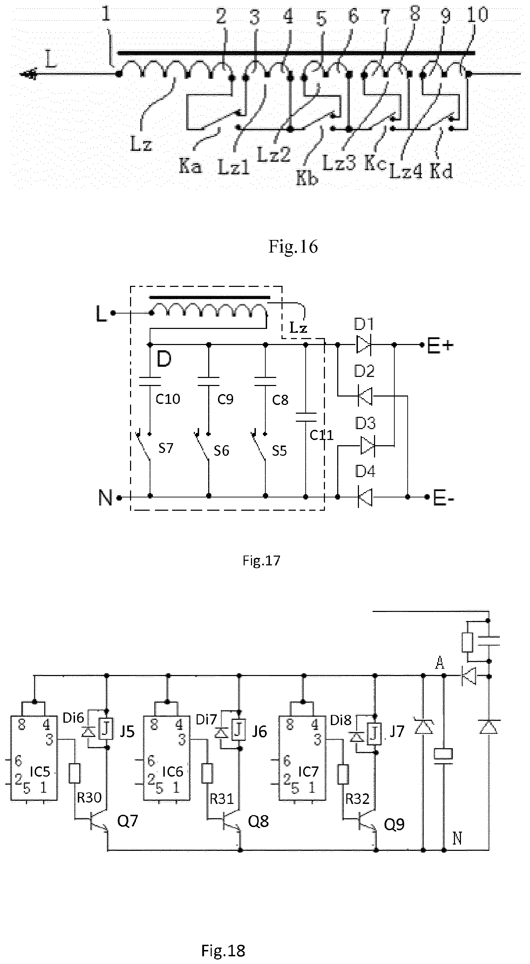

Fig. 15 is the circuit structure of the first inductive ballast LED lamp drive power supply disclosed by the Chinese patent publication No. CN 203340329U. Fig. 16 is a circuit structure diagram of further stable output current.

Fig. 17 is a circuit structure diagram of an inductive ballast LED lamp drive power supply of the present invention as claimed. In the technical solution of the first inductive ballast LED lamp drive power supply, the working voltage drop of the inductive ballast Lz is: -24% ≤ (ballast voltage drop -LED lamp voltage drop)/ LED lamp voltage drop X 100% ≤ +192% of the inductive ballast. In practical application, as the working characteristics and the volt ampere characteristics of the LED lamp are different from those of a gas discharge lamp, therefore, the present invention describes the technical features of the inductive ballast Lz by using impedance. In the embodiment of the present invention, the application environment of the LED lamp is specified as a room temperature environment of 25 degrees.

Practice shows that, the current of the drive circuit of the inductive ballast LED lamp can be increased by connecting the capacitor C to the input ends, namely, the D and N ends of the bridge rectifier circuit of the circuit as shown in Fig. 17. According to this feature, the turn-on and turn-off of the capacitor C are controlled by the switch to stabilize the lamp current of the inductive ballast LED lamp in the case of a change of the input voltage.

The capacitor C is further connected to the input ends, namely, the D and N ends of the bridge rectifier circuit in Fig. 17. A series circuit of the capacitor C8 and the switch S5, the series circuit of the capacitor C9 and the switch S6 and the series circuit of the capacitor C10 and the switch S7 are further connected to the D and N ends of the bridge rectifier circuit. In the figure, the capacitor C is fixedly connected to the D and N ends, the working current of the original drive power supply of the inductive ballast LED lamp will be increased, and the current of the circuit can be decreased by properly increasing the inductance value, so that the working current of the drive power supply of the inductive ballast LED lamp returns to the original design state. Due to the increase of the inductance of the circuit, the performance of the circuit can be improved to a certain extent. The circuits of the C8, the S5, the C9, the S6, the C10 and the S7 function as stabilizing the working current of the drive power supply of the inductive ballast LED lamp when the input voltage changes.

Fig. 18 shows the drive circuits of the switch S5, the switch S6 and the switch S7. The peripheral circuits of the integrated circuits IC5-IC7 in the figure can adopt the prior art disclosed by the CN203675406U and the technical solutions recorded in the Chinese patent number 201420719643.7. The DC power supply is the power supply circuit used in the CN203675406U in Fig. 2. In the figure, the drive circuit of the switch S5 is composed of an integrated circuit IC5, a resistor R30, a transistor Q7, a diode DI6 and a relay J5. One end of the resistor R30 is connected with the third pin of the integrated circuit IC5, the other end of the resistor R30 is connected with the base of the transistor Q7, the negative electrode of the diode DI6 and one end of the relay J5 are connected with the A end together, the positive electrode of the diode DI6 and one end of the relay J5 are connected with the collector of the transistor Q7 together, and the emitter of the transistor Q7 is connected with the N end. In the figure, when the logic circuit of the third pin is 1, the R30 and the transistor Q7 connected to the output end, namely the third pin, of the integrated circuit IC5 turn on the transistor Q7, the relay J8 in the figure is powered and is turned on to drive the switch S5 to act, the switch S5 changes from the normally open state into the normally closed state, the C8is connected to the input ends, namely the D and N ends of the bridge rectifier circuit in parallel, and the current of the drive circuit of the LC ballast LED lamp is increased. When the relay J5 loses power, the DI6 eliminates the induced potential to protect the transistor Q7.

In the figure, the drive circuit of the switch S6 is composed of an integrated circuit IC6, a resistor R31, a transistor Q8, a diode DI7 and a relay J6, one end of the resistor R31 is connected with the third pin of the integrated circuit IC6, the other end of the resistor R31 is connected with the collector of the transistor Q8, the negative electrode of the diode DI7 and one end of the relay J6 are connected with the A end together, the positive electrode of the diode DI7 and one end of the relay J6 are connected with the collector of the transistor Q8 together, and the emitter of the transistor Q8 is connected with the N end. In the figure, when the logic circuit of the third pin is 1, the R31 and the transistor Q8 connected to the output end, namely the third pin, of the integrated circuit IC6 turn on the transistor Q8, the relay J6 in the figure is powered and is turned on to drive the switch S6 to act, the switch S6 changes from the normally open state into the normally closed state, the C9 is connected to the input ends, namely the D and N ends of the bridge rectifier circuit in parallel, and the current of the drive circuit of the LC ballast LED lamp is increased. When the relay J6 loses power, the DI7 eliminates the induced potential to protect the transistor Q8.

In the figure, the drive circuit of the switch S7 is composed of an integrated circuit IC7, a resistor R32, a transistor Q9, a diode DI8 and a relay J7, one end of the resistor R32 is connected with the third pin of the integrated circuit IC7, the other end of the resistor R32 is connected with the collector of the transistor Q9, the negative electrode of the diode DI8 and one end of the relay J7 are connected with the A end together, the positive electrode of the diode DI8 and one end of the relay J7 are connected with the collector of the transistor Q9 together, and the emitter of the transistor Q9 is connected with the N end. In the figure, when the logic circuit of the third pin is 1, the R32 and the transistor Q9 connected to the output end, namely the third pin, of the integrated circuit IC7 turn on the transistor Q9, the relay J7 in the figure is powered and is turned on to drive the switch S7 to act, the switch S7 changes from the normally open state into the normally closed state, the C10 is connected to the input ends, namely the D and N ends of the bridge rectifier circuit in parallel, and the current of the drive circuit of the LC ballast LED lamp is increased. When the relay J7 loses power, the DI8 eliminates the induced potential to protect the transistor Q9.

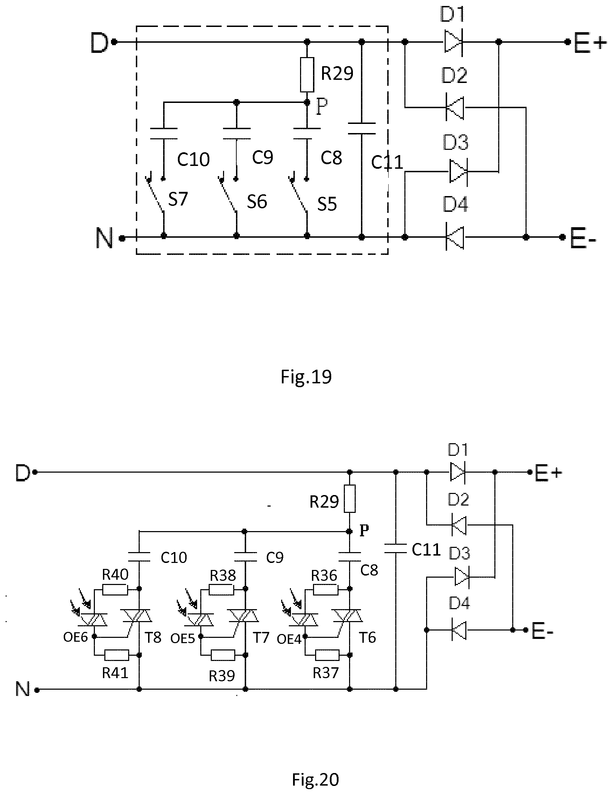

Fig. 19 is a schematic diagram of another circuit structure of the present invention. One of the ends of the C8, the C9 and the C10 in the figure is connected to the D end through a resistor R29. The R29 in the figure relieves the impact of the charging current to the switches when the C8, the C9 and the C10 work. It can be seen from the working properties of the capacitors that, the initial instantaneous current of capacitive charging is very large, the R29 can limit the instantaneous high current and relieve the impact of the charging current to the switches.

The circuit of the electronic switches as shown in Fig. 20 replaces the switch S5, the switch S6 and the switch S7 in Fig. 20. The electronic switch replacing the switch S5 is composed of a thyristor T6, an optocoupler output end OE4, a resistor R36 and a resistor R37, the T2 electrode of the thyristor T6 and one end of the resistor R36 are connected with one end of the capacitor C8, the other end of the resistor R36 is connected with one end of the optocoupler output end OE4, the other end of the optocoupler output end OE4 is connected with the G electrode of the thyristor T6 and one end of the resistor R37, and the other end of the resistor R37 and the T1 electrode of the thyristor T6 are connected with the N end together.

The electronic switch replacing the switch S6 in the figure is composed of a thyristor T7, an optocoupler output end OE5, a resistor R38 and a resistor R39, the T2 electrode of the thyristor T7 and one end of the resistor R38 are connected with one end of the capacitor C9, the other end of the resistor R38 is connected with one end of the optocoupler output end OE5, the other end of the optocoupler output end OE5 is connected with the G electrode of the thyristor T7 and one end of the resistor R39, and the other end of the resistor R39 and the T1 electrode of the thyristor T7 are connected with the N end together.

The electronic switch replacing the switch S7 in the figure is composed of a thyristor T8, an optocoupler output end OE6, a resistor R40 and a resistor R41, the T2 electrode of the thyristor T8 and one end of the resistor R40 are connected with one end of the capacitor C10, the other end of the resistor R40 is connected with one end of the optocoupler output end OE6, the other end of the optocoupler output end OE6 is connected with the G electrode of the thyristor T8 and one end of the resistor R41, and the other end of the resistor R41 and the T1 electrode of the thyristor T8 are connected with the N end together.

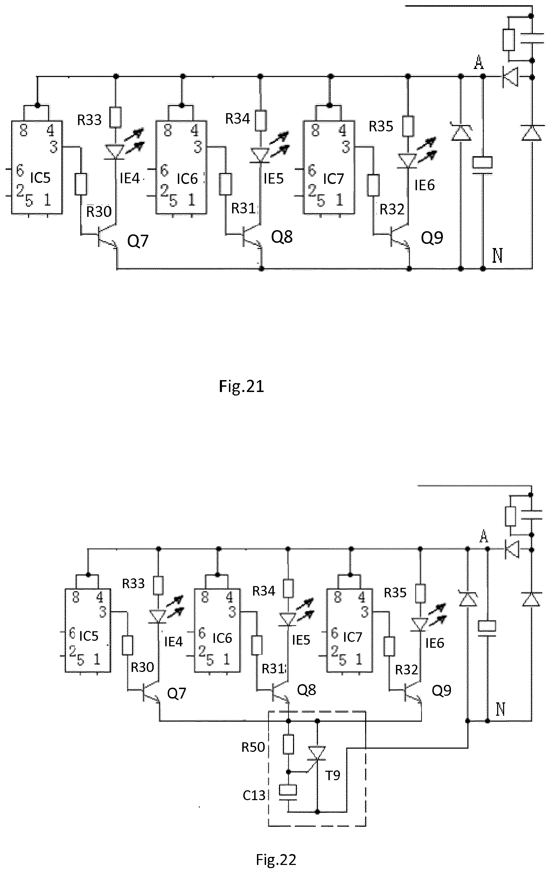

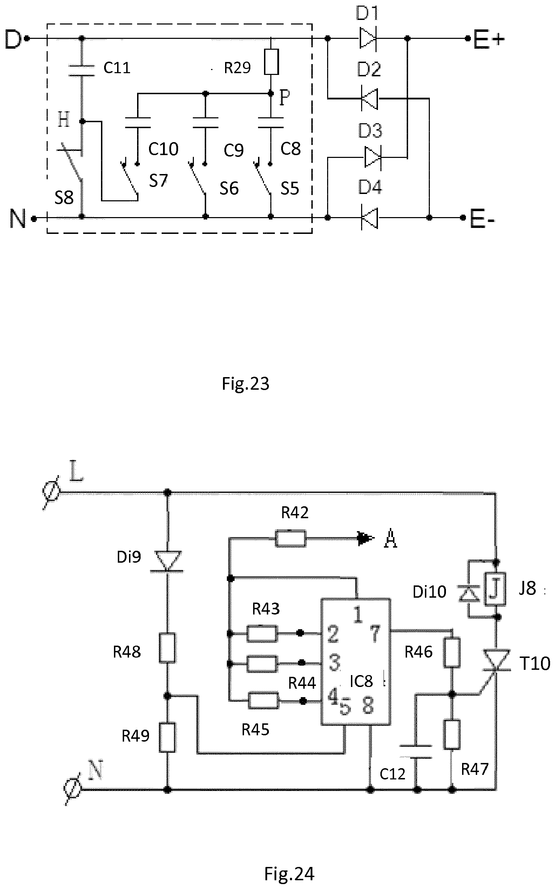

Fig. 21 shows that drive circuits for driving the state conversion of the electronic switch replacing the switch S5, the electronic switch replacing the switch S6 and the electronic switch replacing the switch S7 are connected to the output ends, namely the A end and the N end, of the DC power supply. The drive circuit of the electronic switch replacing the switch S5 in the figure is composed of an integrated circuit IC5, a resistor R30, a transistor Q7, a resistor R33 and an optocoupler input end IE4, one end of the resistor R30 is connected with the third pin of the integrated circuit IC5, the other end of the resistor R30 is connected with the base of the transistor Q7, the emitter of the transistor Q7 is connected with the N end, the collector of the transistor Q7 is connected with the negative electrode of the optocoupler input end IE4, the positive electrode of the optocoupler input end IE4 is connected with one end of the resistor R33, and the other end of the resistor R33 is connected with the A end. In Fig. 24 and Fig. 25, the switch circuit composed of the thyristor T1, the optocoupler output end OE4, the resistor R36 and the resistor R37 is controlled by the optocoupler input end IE4, and the working condition of the optocoupler input end IE4 is controlled by the integrated circuit IC5, the resistor R30, the transistor Q7 and the resistor R33. Since the electronic switch composed of the thyristor T1, the optocoupler output end OE4, the resistor R36 and the resistor R37 replaces the switch S5 to work in the circuit, and the working state of the S5 is set to be normally open, therefore, the electronic switch composed of the thyristor T1, the optocoupler output end OE4, the resistor R36 and the resistor R37 should be in a turn-on working state when the output of the IC5 is 1 (high level). The working principle is as follows: when the output of the IC5 is 1, saturated conduction of the Q7 is realized, and the R33 limits the working current of the optocoupler input end IE4 within the normal working range. As the optocoupler input end IE4 works, the optocoupler output end OE4 works, and the thyristor T1 works.

In the figure, the drive circuit of the electronic switch replacing the switch S6 is composed of an integrated circuit IC6, a resistor R31, a transistor Q8, a resistor R34 and an optocoupler input end IE5, one end of the resistor R31 is connected with the third pin of the integrated circuit IC6, the other end of the resistor R31 is connected with the base of the transistor Q8, the emitter of the transistor Q8 is connected with the N end, the collector of the transistor Q8 is connected with the negative electrode of the optocoupler input end IE5, the positive electrode of the optocoupler input end IE5 is connected with one end of the resistor R34, and the other end of the resistor R34 is connected with the A end. In Fig. 24 and Fig. 25, the switch circuit composed of the thyristor T7, the optocoupler output end OE5, the resistor R38 and the resistor R39 is controlled by the optocoupler input end IE5, and the working condition of the optocoupler input end IE5 is controlled by the integrated circuit IC6, the resistor R31, the transistor Q8 and the resistor R34. Since the electronic switch composed of the thyristor T7, the optocoupler output end OE5, the resistor R38 and the resistor R39 replaces the switch S6 to work in the circuit, and the working state of the S6 is set to be normally open, therefore, the electronic switch composed of the thyristor T7, the optocoupler output end OE5, the resistor R38 and the resistor R39 should be in the turn-on working state when the output of the IC6 is 1 (high level). The working principle is as follows: when the output of the IC6 is 1, saturated conduction of the Q8 is realized, and the R34 limits the working current of the optocoupler input end IE5 within the normal working range. As the optocoupler input end IE5 works, the optocoupler output end OE5 works, and the thyristor T7 works.

In the figure, the drive circuit of the electronic switch replacing the switch S7 is composed of an integrated circuit IC7, a resistor R32, a transistor Q9, a resistor R35 and an optocoupler input end IE6, one end of the resistor R32 is connected with the third pin of the integrated circuit IC7, the other end of the resistor R32 is connected with the base of the transistor Q9, the emitter of the transistor Q9 is connected with the N end, the collector of the transistor Q9 is connected with the negative electrode of the optocoupler input end IE6, the positive electrode of the optocoupler input end IE6 is connected with one end of the resistor R35, and the other end of the resistor R35 is connected with the A end. In Fig. 24 and Fig. 25, the switch circuit composed of the thyristor T8, the optocoupler output end OE6, the resistor R40 and the resistor R41 is controlled by the optocoupler input end IE6, and the working condition of the optocoupler input end IE6 is further controlled by the integrated circuit IC7, the resistor R32, the transistor Q9 and the resistor R35. Since the electronic switch composed of the thyristor T8, the optocoupler output end OE6, the resistor R40 and the resistor R41 replaces the switch S7 to work in the circuit, and the working state of the S7 is set to be normally open, therefore, the electronic switch composed of the thyristor T8, the optocoupler output end OE6, the resistor R40 and the resistor R41 should be in the turn-on working state when the output of the IC7 is 1 (high level). The working principle is as follows: when the output of the IC7 is 1, saturated conduction of the Q9 is realized, and the R35 limits the working current of the optocoupler input end IE6 within the normal working range. As the optocoupler input end IE6 works, the optocoupler output end OE6 works, and the thyristor T8 works.

Compared with the technical solution (Fig. 16 in the description) in Fig. 10 in CN203340329U, the technical solution as shown in Fig. 19 has the same functions apparently, as the inductive ballast of the present invention has no tap, the efficiency of production and assembly are greatly improved, the production cost is saved, and the efficiency of the inductive ballast can be higher. Since the control circuit of the present invention is not in the main circuit (small current is controlled), the requirements for the control circuit can be reduced. The preferable solution of the present invention is illustrated in detail by taking the 120 W (nominal value) and 700 mA (nominal value) lamp of the inductive ballast and the circuit in which the impedance of the inductive ballast Lz is 116/0.7≈165 ohms as an example. In the present example, for the value of R29 in Fig. 19, by considering the loss after the access of the resistor, the R29 is preferably 10Q, in Fig. 17, Fig. 19, Fig. 20, Fig. 21 and Fig. 22, the C8 is preferably 0.22µF, the C9 is preferably 0.22µF, the C10 is preferably 0.15µP, and the C is preferably 0.047µF. The CS in the technical solution of Fig. 13 of the CN 203340329U is preferably 5µF in the present example. The input voltage of the circuit is 220.2V, the circuit current is 0.607A, the circuit power is 130W, the power factor is 0.972, the lamp voltage is 181.6V, the lamp current is 0.681A, the lamp power is 123.7W, and the power supply efficiency is 95.2%. The trigger voltage TR of the IC3 in the present example is set to be greater than 220V, and is preferably 222V in the present example. The switch S7 is turned off at this time. When the supply voltage rises to the threshold voltage TH, 227V is preferred in the present example, the switch S7 is turned off (0.74A before turn-off), and the lamp current is decreased (0.65A after turn-off). When the supply voltage drops to the trigger voltage TR 222V, the switch S7 is closed again (0.61A before closing and 0.7A after closing). In the present example, the threshold voltage TH of the IC1 and the IC 12 is set to be smaller than 220V. The IC1 and IC2 form two-stage low voltage regulation, when the supply voltage drops to the trigger voltage TR of the IC2, 213V is preferred in the present example, the switch S6 is closed (0.62A before closing), and the lamp current is increased (0.69A after closing). When the supply voltage rises to the threshold voltage TH of the IC2, 218V is preferred in the present example, the switch S6 is turned off (0.74A before turn-off), and the lamp current is decreased (0.68A after turn-off). When the supply voltage drops to the trigger voltage TR of the IC1, 204V is preferred in the present example, the switch S5 is closed (0.62A before closing), and the lamp current is increased (0.68A after closing). When the supply voltage rises to the threshold voltage TH of the IC1, 212V is preferred in the present example, the switch S5 is turned off (0.74A before turn-off), and the lamp current is decreased (0.69A after turn-off). When the supply voltage is 202V, the lamp current is 0.66A. When the supply voltage is 233.5V, the lamp current is 0.70A. By changing the states of the switches S5, S6 and S7, the change of the lamp current is controlled within a small range when the input voltage changes. Of course, more switches can be set to meet a wider input voltage range of the lamp if necessary. The efficiency 95.2% of the present example is much higher than the certification standard of energy-saving evaluation values of non-isolation 92% and isolation 90% in the *Technical Specification for Energy Saving Certification of AC Electronic Control Device for LED Module.* Moreover, if the copper loss of the inductive ballast is reduced, or the iron core material is improved, or the iron core structure is changed and other technical means can be adopted, the efficiency of the drive power supply of the inductive ballast can be still improved.

It should also be noted that, in the circuit of an inductive ballast gas discharge lamp (e.g., a fluorescent lamp, a high-pressure sodium lamp or the like), the power factor of the circuit is very low (usually about 0.5), and a compensation capacitor must be added to obtain a high power factor due to the low inductive power factor. However, after the compensation capacitor is increased, the power factor of the inductive ballasted gas discharge lamp circuit is increased, but the harmonics of the circuit are also increased because the gas discharge lamp requires a high re-ignition voltage after zero crossing, in a resonant circuit of the compensation capacitor, the inductive ballast and the lamp, a re-ignition peak voltage forms a large number of harmonics, and their values are far more than the harmonic requirements in the GB 17625.1. This shows that, in order to satisfy the technical requirements of 3C, namely the technical requirements of GB17625.1 in the certification standard, by the inductive ballast gas discharge lamp circuit, the inductive ballast gas discharge lamp circuit can only run in a working condition of low power factor (that is to say, the compensation capacitor cannot be added). This is also why the compensation capacitors are marked by imaginary lines on the production identifiers of the inductive ballasts of the widely used gas discharge lamps at present. In the embodiment of the present invention, namely "the input voltage is 220V, the input current is 0.59A, the power is 125W and the circuit power factor is 0.96", as the output voltage of the bridge rectification bridge arm of the drive power supply of the inductive ballast LED lamp of the present invention is square waves, when the high power factor with the circuit power factor of 0.96 is compensated by the capacitor, the harmonic content also fully satisfies the corresponding harmonic requirements in the GB 17625.1. The measurement data are: 2 times of 0.02, 3 times of 19.62, 5 times of 6.68, 7 times of 3.39, 9 times of 2.51 and 11 times of 1.63.

Fig. 22 is a schematic diagram of a local circuit structure of the drive power supply of the inductive ballast LED lamp of the present invention. In the figure, the emitters of the transistor Q7, the transistor Q8 and the transistor Q9 are connected with the positive electrode of a thyristor T9 and one end of a resistor R50, the other end of the resistor R50 is connected with the positive electrode of a capacitor C13 and the control electrode of the thyristor T9, and the negative electrode of the capacitor C13 and the negative electrode of the thyristor T9 are connected with the N end together. The functions of the three elements, namely the thyristor T9, the resistor R50 and the capacitor C13 are to prevent the Q7, the Q8 and the Q9 from working in several seconds before the startup of the drive circuit of the inductive ballast LED lamp. As voltage controlled devices are arranged at the input ends of the integrated circuits IC5, IC6 and IC7 used in the technical solution of the present invention, the sampling resistance at the input end of the power supply is very large, the voltage at both ends of the filter capacitor (i.e., C10 in Fig. 4 of the CN203675406U and C in Fig. 3 in the patent number 201420719643.7) rises very slowly after startup, the voltage at the second pin of the integrated circuit IC is lower than the trigger voltage TR, and the logic circuit of the output end is 1 (high level). It can be seen from Fig. 22 that the capacitors C8, C9 and C10 connected to the G and N ends (through R29) are turned on, and that the current of the drive power supply of the inductive ballast LED lamp is greater than the set working current. The high current during the startup brings shortcomings to the drive power supply of the inductive ballast LED lamp. In Fig. 26, the functions of the three elements, namely the thyristor T9, the resistor R50 and the capacitor C13 are to prevent the Q7, the Q8 and the Q9 from working in several seconds before the startup of the drive circuit of the inductive ballast LED lamp so as to ensure that the startup current of the drive power supply of the inductive ballast LED lamp is smaller than the set working current. The working principle is as follows: the third pins of the IC5, the IC6 and the IC7 are high levels after the startup, but because the thyristor T9 does not meet the turn-on conditions at this time, the collectors of the IE4, the IE5 and the IE6 do not reach the necessary working conditions, the OE4, the OE5 and the OE6 do not work, and the electronic switch is turned off. At this time, the current of the drive power supply of the inductive ballast LED lamp is smaller than the set working current. When the capacitor C13 charges the C13 through the following three branches: A-the third pin of the IC5-R30-the emitter junction of the Q7-R50, A-the third pin of the IC6-R31-the emitter junction of the Q8-R50, and A-the third pin of the IC7-R32-the emitter junction of the Q9-R50, when the voltage on the C13 rises to trigger the turn-on of the thyristor T9, the circuit returns to the designed normal working mode. The time from the startup to the triggered turn-on of the thyristor T9 can be set as 1-2 seconds. The R50 is preferably 200KΩ, and the C13 is preferably 100µF.

As the functions of Fig. 21 are the same as those of Fig. 18, the technical solution of Fig. 22 is also applicable to Fig. 18, namely delayed turn-on of the Q7, the Q8 and the Q9, and the delayed closing of the S5, the S6 and the S7.

Fig. 23 is a schematic diagram of another circuit structure of the present invention. In the figure, a capacitor C11 is connected to the input ends, namely the D and N ends of the bridge rectifier circuit through a switch S8, one end of the switch S7 is connected with a capacitor C10, and the other end of the switch S7 is connected with the connecting point, namely an H point, of the capacitor C11 and the switch S8. The switch S8 in the figure is a timing variable power switch, when the switch S8 is turned off periodically, the capacitor C11 and the capacitor C10 are cut off, the working current of the drive power supply of the inductive ballast LED lamp is decreased, and the lamp power becomes smaller.

Fig. 24 is a timing drive circuit of the switch S8 as shown in Fig. 23. In the figure, a drive circuit for driving the state conversion of the switch is connected to the input ends, namely the L and N ends of the power supply. The drive circuit is composed of an integrated circuit IC8, a resistor R42, a resistor R43, a resistor R44, a resistor R45, a resistor R46, a resistor R47, a resistor R48, a resistor R49, a capacitor C12, a diode DI9, a diode DI10, a thyristor T10 and a relay J8, one end of the resistor R42 is connected with the A end, the other end of the resistor R42 is connected with the first pin of the integrated circuit IC8, one end of the resistor R43, one end of the resistor R44 and one end of the resistor R45, the other end of the resistor R43 is connected with the second pin of the integrated circuit IC8, the other end of the resistor R44 is connected with the third pin of the eighth integrated circuit IC8, the other end of the resistor R45 is connected with the fourth pin of the integrated circuit IC8, the diode DI9, the resistor R48 and the resistor R49 are sequentially connected in series and are connected with the L end and the N end, the connecting site of the resistor R48 and the resistor R49 is connected with the fifth pin of the integrated circuit IC8, one end of the resistor R46, one end of the resistor R47 and one end of the capacitor C12 are connected with the control electrode of the thyristor T10, the other end of the resistor R46 is connected with the seventh pin of the integrated circuit IC8, the other end of the resistor R47, the other end of the capacitor C12 and the negative electrode of the thyristor T10 are connected with the N end, after the diode DI10 and the relay J8 are connected in parallel with each other, the negative electrode connecting point of the diode DI10 is connected with the L end, and the positive electrode connecting point of the diode DI10 is connected with the positive electrode of the thyristor T10. In the figure, the timing circuit of the IC8 is preferably the PIC singlechip 12F508. The first pin is a power supply positive electrode, and as the supply voltage of the 12F508 is 2-5.5V, a resistor R42 is needed for limiting the current and reducing the voltage of the 12F508. The eighth pin is a power supply negative electrode, the seventh pin is the output end, the resistor R46 and the resistor R47 are the trigger resistors of the T10, and the capacitor C12 and the resistor R47 have anti-interference and temperature compensation functions. The second pin, the third pin, the fourth pin, the resistor R43, the resistor R44 and the resistor R45 constitute a time setting circuit. The diode DI9, the resistor R48 and the resistor R49 are power supply sampling circuits. The diode DI10 eliminates induced potential to protect the thyristor T10 in the case of power down of the relay J8.

In the circuit of the 120W (nominal value) and 700mA (nominal value) LED lamp driven by the inductive ballast drive power supply, in which the impedance of the inductive ballast Lz is 116/0.7≈165 ohms, as shown in Fig. 17, Fig. 19, Fig. 20, Fig. 21, Fig. 22, Fig. 23 and Fig. 24, when the time of the timing circuit of Fig. 26 reaches the set time, the seventh pin of the IC8, namely the 12F508 outputs high level, and the switch S8 cuts off the capacitor C and the capacitor C10 from the circuit. However, the total capacity of the C10 and the C in the circuit is only 0.2µ, the current change of the lamp with the capacitance 0.2µF cut off is too small and does not satisfy the requirements of timing variable power energy saving. Therefore, in the case that when the drive circuits of the switches correspondingly connected with the capacitors C8, C9 and C10 in series are the same, the preferred solution of the present invention is illustrated in detail by the timing variable power energy saving of the present invention by taking the 120 W (nominal value) and 700 mA (nominal value) lamp of the inductive ballast and the circuit in which the impedance of the inductive ballast Lz is 145/0.7≈207 ohms as an example. In the present invention, the R29 is preferably 10 Ω, the C8 is preferably 0.33µF, the C9 is preferably 0.33µF, the C10 is preferably 0.22µF, and the C is preferably 0.022µF. At the rated voltage (220V) of the circuit, the lamp current is 0.64A, and the power is 115W. The trigger voltage TR of the IC3 in the present example is set to be greater than 220V, and is preferably 222V in the present example. The switch S7 is closed at this time. When the supply voltage rises to the threshold voltage TH, 228V is preferred in the present example, the switch S7 is turned off (0.68A before turn-off), and the lamp current is decreased (0.63A after turn-off). When the supply voltage drops to the trigger voltage TR 222V, the switch S7 is closed again (0.60A before closing and 0.65A after closing). In the present example, the threshold voltage TH of the IC1 and the IC 12 is set to be smaller than 220V. The IC1 and IC2 form two-stage low voltage regulation, when the supply voltage drops to the trigger voltage TR of the IC2, 212V is preferred in the present example, the switch S6 is closed (0.59A before closing), and the lamp current is increased (0.64A after closing). When the supply voltage rises to the threshold voltage TH of the IC2, 218V is preferred in the present example, the switch S6 is turned off (0.68A before turn-off), and the lamp current is decreased (0.62A after turn-off). When the supply voltage drops to the trigger voltage TR of the IC1, 204V is preferred in the present example, the switch S5 is closed (0.60A before closing), and the lamp current is increased (0.64A after closing). When the supply voltage rises to the threshold voltage TH of the IC1, 212V is preferred in the present example, the switch S5 is turned off (0.69A before turn-off), and the lamp current is decreased (0.64A after turn-off). By changing the states of the switches S5, S6 and S7, the change of the lamp current is controlled within a small range when the input voltage changes. When the time of the timing circuit of Fig. 23 reaches the set time, the seventh pin of the IC8, namely the 12F508 outputs high level, and the switch S8 cuts off the capacitor C (0.22µF) and the capacitor C10 (0.22µF) from the circuit. The circuit of the (nominal value) and 700 mA (nominal value) lamp driven by the inductive ballast drive power supply changes from the working state in which the input voltage is 220V, the lamp current is 0.64A and the lamp power is 115W into the working state in which the input voltage is 220V, the lamp current is 0.43A and the lamp power is 75W.

In the circuit as shown in Fig. 17 to Fig. 22, when the LED lamp as shown in Fig. 17 is 60W (nominal value), the impedance of the ballast Lz is preferably 126V/0.35A=360 ohms. In Fig. 17, Fig. 19, Fig. 20 and Fig. 22, the C8 is preferably 0.15µP, the C9 is preferably 0.15µP, the C10 is preferably 0.057µF, and the C is preferably 0.1µF. The trigger voltage TR of the IC3 is set to be greater than 220V and is preferably 222V in the present example. When the rated voltage is 220V, the switch S7 is closed, and the lamp current is 0.32A. When the supply voltage rises to the threshold voltage TH, 227V is preferred in the present example, the S7 is turned off (0.34A before turn-off), and the lamp current is decreased (0.32A after turn-off). When the supply voltage drops to the trigger voltage TR 222V, the switch S7 is closed again (0.31A before closing and 0.33A after closing). The threshold voltage TH of the IC1 and the IC 12 is set to be smaller than 220V. The IC1 and IC2 form two-stage low voltage regulation, when the supply voltage drops to the trigger voltage TR of the IC2, 212V is preferred in the present example, the switch S6 is closed (0.29A before closing), and the lamp current is increased (0.32A after closing). When the supply voltage rises to the threshold voltage TH of the IC2, 218V is preferred in the present example, the switch S6 is turned off (0.35A before turn-off), and the lamp current is decreased (0.32A after turn-off). When the supply voltage drops to the trigger voltage TR of the IC1, 204V is preferred in the present example, the switch S5 is closed (0.3A before closing), and the lamp current is increased (0.33A after closing). When the supply voltage rises to the threshold voltage TH of the IC1, 210V is preferred in the present example, the switch S5 is turned off (0.35A before turn-off), and the lamp current is decreased (0.32A after turn-off). By changing the states of the switches S5, S6 and S7, the change of the lamp current is controlled within a small range when the input voltage changes. Of course, more switches can be set to enable the lamp to work normally within a wider input voltage range if necessary.

In the circuit as shown in Fig. 17 to Fig. 22, when the LED lamp as shown in Fig. 17 is 300W (nominal value), the impedance of the ballast Lz is preferably 111V/2. 1A=52 ohms. In Fig. 17, Fig. 19, Fig. 20 and Fig. 22, the C8 is preferably 0.47µF, the C9 is preferably 0.47µF, the C10 is preferably 0.33µF, and the C is preferably 0.1µF. The trigger voltage TR of the IC3 is set to be greater than 220V and is preferably 222V in the present example. When the rated voltage is 220V, the switch S7 is closed, and the lamp current is 1.8A. When the supply voltage rises to the threshold voltage TH, 227V is preferred in the present example, the S7 is turned off (2.0A before turn-off), and the lamp current is decreased (1.8A after turn-off). When the supply voltage drops to the trigger voltage TR 222V, the switch S7 is closed again (1.7A before closing and 1.9A after closing). The threshold voltage TH of the IC1 and the IC 12 is set to be smaller than 220V. The IC1 and IC2 form two-stage low voltage regulation, when the supply voltage drops to the trigger voltage TR of the IC2, 213V is preferred in the present example, the switch S6 is closed (1.7A before closing), and the lamp current is increased (1.9A after closing). When the supply voltage rises to the threshold voltage TH of the IC2, 218V is preferred in the present example, the switch S6 is turned off (2.0A before turn-off), and the lamp current is decreased (1.8A after turn-off). When the supply voltage drops to the trigger voltage TR of the IC1, 205V is preferred in the present example, the switch S5 is closed (1.7A before closing), and the lamp current is increased (1.9A after closing). When the supply voltage rises to the threshold voltage TH of the IC1, 211V is preferred in the present example, the switch S5 is turned off (2.0A before turn-off), and the lamp current is decreased (1.8A after turn-off). By changing the states of the switches S5, S6 and S7, the change of the lamp current is controlled within a small range when the input voltage changes. Of course, more switches can be set to enable the lamp to work normally within a wider input voltage range if necessary.

The foregoing descriptions listed in the present invention are merely preferred embodiments of the present invention, and any equivalent technical variations made within the working principle and idea of the present invention are considered to be within the protection scope of the present invention.

## Claims

1. An inductive ballast drive power supply for a LED lamp with a variable power energy saving function, said inductive ballast drive power supply comprising an inductive ballast (Lz) and a bridge rectifier circuit comprising input ends, namely D and N ends, said bridge rectifier circuit being connected with said input ends to an output end of the inductive ballast (Lz), the drive power supply further comprises a DC power supply circuit having an A end and an N end for supplying energy to a control circuit, **characterized in that** an eleventh capacitor (C11) is connected to said input ends, namely D and N ends of the bridge rectifier circuit; a series circuit of an eighth capacitor (C8) and a fifth switch (S5), a series circuit of a ninth capacitor (C9) and a sixth switch (S6), and a series circuit of a tenth capacitor (C10) and a seventh switch (S7) are further connected to the input ends, namely the D and N ends, of the bridge rectifier circuit; and a drive circuit for driving the state conversion of the fifth switch (S5), a drive circuit of the sixth switch (S6) and a drive circuit of the seventh switch (S7) are connected with output ends, namely to the A end and the N end of the DC power supply circuit.

2. The inductive ballast drive power supply of claim 1, wherein the inductive ballast (Lz) is an inductive ballast with an impedance range of greater than 52 ohms to smaller than 360 ohms.

3. The inductive ballast drive power supply for a LED lamp of claim 1 or 2, **characterized in that** connecting points, namely points P of the eighth capacitor (C8), the ninth capacitor (C9) and the tenth capacitor (C10) are connected with the D end through a twenty-ninth resistor (R29) ;
the drive circuit for driving the state conversion of the fifth switch (S5) is composed of a fifth integrated circuit (IC5), a thirtieth resistor (R30), a seventh transistor (Q7), a sixth diode (DI6) and a fifth relay (J5), one end of the thirtieth resistor (R30) is connected with the third pin of the fifth integrated circuit (IC5), the other end of the thirtieth resistor (R30) is connected with the base of the seventh transistor (Q7), the negative electrode of the sixth diode (DI6) and one end of the fifth relay (J5) are connected with the A end together, the positive electrode of the sixth diode (DI6) and one end of the fifth relay (J5) are connected with the collector of the seventh transistor (Q7) together, and the emitter of the seventh transistor (Q7) is connected with the N end;
the drive circuit of the sixth switch (S6) is composed of a sixth integrated circuit (IC6), a thirty-first resistor (R31), an eighth transistor (Q8), a seventh diode (DI7) and a sixth relay (J6), one end of the thirty-first resistor (R31) is connected with the third pin of the sixth integrated circuit (IC6), the other end of the thirty-first resistor (R31) is connected with the base of the eighth transistor (Q8), the negative electrode of the seventh diode (DI7) and one end of the sixth relay (J6) are connected with the A end together, the positive electrode of the seventh diode (DI7) and one end of the sixth relay (J6) are connected with the collector of the eighth transistor (Q8) together, and the emitter of the eighth transistor (Q8) is connected with the N end; and
the drive circuit of the seventh switch (S7) is composed of a seventh integrated circuit (IC7), a thirty-second resistor (R32), a ninth transistor (Q9), an eighth diode (DI8) and a seventh relay (J7), one end of the thirty-second resistor (R32) is connected with the third pin of the seventh integrated circuit (IC7), the other end of the thirty-second resistor (R32) is connected with the base of the ninth transistor (Q9), the negative electrode of the eighth diode (DI8) and one end of the seventh relay (J7) are connected with the A end together, the positive electrode of the eighth diode (DI8) and one end of the seventh relay (J7) are connected with the collector of the ninth transistor (Q9) together, and the emitter of the ninth transistor (Q9) is connected with the N end.

4. The inductive ballast drive power supply for a LED lamp of claim 1 or 2, **characterized in that** the fifth switch (S5) is an electronic switch, the electronic switch is composed of a sixth thyristor (T6), a fourth optocoupler output end (OE4), a thirty-sixth resistor (R36) and a thirty-seventh resistor (R37), the T2 electrode of the sixth thyristor (T6) and one end of the thirty-sixth resistor (R36) are connected with one end of the eighth capacitor (C8), the other end of the thirty-sixth resistor (R36) is connected with one end of the fourth optocoupler output end (E4), the other end of the fourth optocoupler output end (E4) is connected with a G electrode of the sixth thyristor (T6) and one end of the thirty-seventh resistor (R37), and the other end of the thirty-seventh resistor (R37) and the T1 end of the sixth thyristor (T6) are connected with the N end together;
a drive circuit for driving the state conversion of the electronic switch is connected to the output ends, namely the A end and the N end of the DC power supply circuit, the drive circuit of the electronic switch is composed of the fifth integrated circuit (IC5), a thirtieth resistor (R30), the seventh transistor (Q7), a thirty-third resistor (R33) and a fourth optocoupler input end (IE4), on end of the one end of the thirtieth resistor (R30) is connected with the third pin of the fifth integrated circuit (IC5), the other end of the thirtieth resistor (R30) is connected with the base of the seventh transistor (Q7), the emitter of the seventh transistor (Q7) is connected with the N end, the collector of the seventh transistor (Q7) is connected with the negative electrode of the fourth optocoupler input end (IE4), the positive electrode of the fourth optocoupler input end (IE4) is connected with one end of the thirty-third resistor (R33), and the other end of the thirty-third resistor (R33) is connected with the A end;
the sixth switch (S6) is an electronic switch, the electronic switch is composed of a seventh thyristor (T2), a fifth optocoupler output end (OE5), a thirty-eighth resistor (R38) and a thirty-ninth resistor (R39), a T2 electrode of the seventh thyristor (T2) and one end of the thirty-eighth resistor (R38) are connected with one end of the ninth capacitor (C9), the other end of the thirty-eighth resistor (R38) is connected with one end of the fifth optocoupler output end (OE5), the other end of the fifth optocoupler output end (OE5) is connected with the G electrode of the seventh thyristor (T2) and one end of the thirty-ninth resistor (R39), and the other end of the thirty-ninth resistor (R39) and the T1 electrode of the seventh thyristor (T2) are connected with the N end together;
a drive circuit for driving the state conversion of the electronic switch is connected to the output ends, namely the A end and the N end of the DC power supply circuit, the drive circuit of the electronic switch is composed of a sixth integrated circuit (IC6), a thirty-first resistor (R31), an eighth transistor (Q8), a thirty-fourth resistor (R34) and a fifth optocoupler input end (IE5), one end of the thirty-first resistor (R31) is connected with the third pin of the sixth integrated circuit (IC6), the other end of the thirty-first resistor (R31) is connected with the base of the eighth transistor (Q8), the emitter of the eighth transistor (Q8) is connected with the N end, the collector of the eighth transistor (Q8) is connected with the negative electrode of the fifth optocoupler input end (IE5), the positive electrode of the fifth optocoupler input end (IE5) is connected with one end of the thirty-fourth resistor (R34), and the other end of the thirty-fourth resistor (R34) is connected with the A end;
the seventh switch (S7) is an electronic switch, the electronic switch is composed of an eighth thyristor (T8), a sixth optocoupler output end (OE6), a fortieth resistor (R40) and a forty-first resistor (R41), the T2 electrode of the eighth thyristor (T8) and one end of the fortieth resistor (R40) are connected with one end of the tenth capacitor (C10), the other end of the fortieth resistor (R40) is connected with one end of the sixth optocoupler output end (OE6), the other end of the sixth optocoupler output end (OE6) is connected with the G electrode of the eighth thyristor (T8) and one end of the forty-first resistor (R41), and the other end of the forty-first resistor (R41) and the T1 electrode of the eighth thyristor (T8) are connected with the N end together; and
a drive circuit for driving the state conversion of the electronic switch is connected to the output ends, namely the A end and the N end of the DC power supply circuit, the electronicdrive circuit of the electronic switch is composed of a seventh integrated circuit (IC7), a thirty-second resistor (R32), a ninth transistor (Q9), a thirty-fifth resistor (R35) and a sixth optocoupler input end (IE6), one end of the thirty-second resistor (R32) is connected with the third pin of the seventh integrated circuit (IC7), the other end of the thirty-second resistor (R32) is connected with the base of the ninth transistor (Q9), the emitter of the ninth transistor (Q9) is connected with the N end, the collector of the ninth transistor (Q9) is connected with the negative electrode of the sixth optocoupler input end (IE6), the positive electrode of the sixth optocoupler input end (IE6) is connected with one end of the thirty-fifth resistor (R35), and the other end of the thirty-fifth resistor (R35) is connected with the A end.

5. The inductive ballast drive power supply for a LED lamp of claim 4 , wherein the emitters of the seventh transistor (Q7), the eighth transistor (Q8) and the ninth transistor (Q9) are connected with the positive electrode of a ninth thyristor (T9) and one end of a fiftieth resistor (R50), the other end of the fiftieth resistor (R50) is connected with the positive electrode of a thirteenth capacitor (C13) and the control electrode of the ninth thyristor (T9), and the negative electrode of the thirteenth capacitor (C13) and the negative electrode of the ninth thyristor (T9) are connected with the N end together.

6. The inductive ballast drive power supply for a LED lamp of claim 1 or 2, **characterized in that** the eleventh capacitor (C11) is connected to the input ends, namely the D and N ends of the bridge rectifier circuit through an eighth switch (S8), one end of the seventh switch (S7) is connected with a tenth capacitor (C10), and the other end of the seventh switch (S7) is connected with the connecting point, namely a point H of the eleventh capacitor (C11) and the eighth switch (S8);
a drive circuit for driving the state conversion of the eighth switch (S8) is connected to the input ends, namely the L and N ends of the power supply, the circuit is composed of an eighth integrated circuit (IC8), a forty-second resistor (R42), a forty-third resistor (R43), a forty-fourth resistor (R44), a forty-fifth resistor (R45), a forty-sixth resistor (R46), a forty-seventh resistor (R47), a forty-eighth resistor (R48), a forty-ninth resistor (R49), a twelfth capacitor (C12), a ninth diode (DI9), a tenth diode (DI10), a tenth thyristor (T10) and an eighth relay (J8), one end of the forty-second resistor (R42) is connected with the A end, the other end of the forty-second resistor (R42) is connected with the first pin of the eighth integrated circuit (IC8), one end of the forty-third resistor (R43), one end of the forty-fourth resistor (R44) and one end of the forty-fifth resistor (R45), the other end of the forty-third resistor (R43) is connected with the second pin of the eighth integrated circuit (IC8), the other end of the forty-fourth resistor (R44) is connected with the third pin of the eighth integrated circuit (IC8), the other end of the forty-fifth resistor (R45) is connected with the fourth pin of the eighth integrated circuit (IC8), the ninth diode (DI9), the forty-eighth resistor (R48) and the forty-ninth resistor (R49) are sequentially connected in series and are connected with the L end and the N end, the connecting site of the forty-eighth resistor (R48) and the forty-ninth resistor (R49) is connected with the fifth pin of the eighth integrated circuit (IC8), one end of the forty-sixth resistor (R46), one end of the forty-seventh resistor (R47) and one end of the twelfth capacitor (C12) are connected with the control electrode of the tenth thyristor (T10), the other end of the forty-sixth resistor (R46) is connected with the seventh pin of the eighth integrated circuit (IC8), the other end of the forty-seventh resistor (R47), the other end of the twelfth capacitor (C12) and the negative electrode of the tenth thyristor (T10) are connected with the N end, after the tenth diode (DI10) and the eighth relay (J8) are connected with each other in parallel, the negative electrode connecting point of the tenth diode (DI10) is connected with the L end, and the positive electrode connecting point of the tenth diode (DI10) is connected with the positive electrode of the tenth thyristor (T10).

## Patentansprüche

1. Induktive Stromversorgung einer vorgeschalteten LED-Lampe mit variabler Leistung und Energieeinsparung, wobei diese induktive Stromversorgung ein induktives Vorschaltgerät (Lz) und eine Brückengleichrichterschaltung, die Eingangsenden, nämlich die Enden D und N, umfasst, wobei diese Brückengleichrichterschaltung mit diesen Enden zu einem Ausgangsende des induktiven Vorschaltgeräts (Lz) verbunden ist, die Stromversorgung weiter eine Gleichstromversorgungsschaltung umfasst, die ein A-Ende und ein N-Ende zur Stromversorgung an eine Steuerschaltung umfasst, **dadurch gekennzeichnet, dass** ein elfter Kondensator (C11) mit diesen Eingangsenden, nämlich den D- und N-Enden der Brückengleichrichterschaltung, verbunden ist; eine Reihenschaltung eines achten Kondensators (C8) und eines fünften Schalters (S5), eine Reihenschaltung eines neunten Kondensators (C9) und eines sechsten Schalters (S6), und eine Reihenschaltung eines zehnten Kondensators (C10) und eines siebten Schalters (S7) weiter mit den Eingangsenden, nämlich den D- und N-Enden, der Brückengleichrichterschaltung, verbunden sind; und eine Ansteuerschaltung zur Ansteuerung der Zustandsumwandlung des fünften Schalters (S5), eine Ansteuerschaltung des sechsten Schalters (S6) und eine Ansteuerschaltung des siebten Schalters (S7) mit Ausgangsenden, nämlich dem A-Ende und dem N-Ende der Gleichstromversorgungsschaltung verbunden sind.

2. Induktive Stromversorgung einer vorgeschalteten LED-Lampe nach Anspruch 1 **dadurch gekennzeichnet, dass** das induktive Vorschaltgerät (Lz) ein induktives Vorschaltgerät ist, das einen Impedanzbereich größer als 52 Ohm bis kleiner als 360 Ohm aufweist.

3. Induktive Stromversorgung einer vorgeschalteten LED-Lampe nach Anspruch 1 oder 2 **dadurch gekennzeichnet, dass** Anschlusspunkte P des achten Kondensators (C8), des neunten Kondensators (C9) und des zehnten Kondensators (C10) mit dem D-Ende über einen neunundzwanzigsten Widerstand (R29) verbunden sind;
die Ansteuerschaltung zur Ansteuerung der Zustandsumwandlung des fünften Schalters (S5) aus einem fünften integrierten Schaltkreis (IC5), einem dreißigsten Widerstand (R30), einem siebten Transistor (Q7), einer sechsten Diode (DI6) und einem fünften Relais (J5) besteht, ein Ende des dreißigsten Widerstands (R30) mit dem dritten Stift des fünften integrierten Schaltkreises (IC5) verbunden ist, das andere Ende des dreißigsten Widerstands (R30) mit der Basis des siebten Transistors (Q7) verbunden ist, die negative Elektrode der sechsten Diode (DI6) und ein Ende des fünften Relais (J5) mit dem A-Ende zusammen verbunden sind, die positive Elektrode der sechsten Diode (DI6) und ein Ende des fünften Relais (J5) mit dem Kollektor des siebten Transistors (Q7) zusammen verbunden sind, und der Emitter des siebten Transistors (Q7) mit dem N-Ende verbunden ist;
die Ansteuerschaltung des sechsten Schalters (S6) aus einem sechsten integrierten Schaltkreis (IC6), einem einunddreißigsten Widerstand (R31), einem achten Transistor (Q8), einer siebten Diode (DI7) und einem sechsten Relais (J6) besteht, ein Ende des einunddreißigsten Widerstands (R31) mit dem dritten Stift des sechsten integrierten Schaltkreises (IC6) verbunden ist, das andere Ende des einunddreißigsten Widerstands (R31) mit der Basis des achten Transistors (Q8) verbunden ist, die negative Elektrode der siebten Diode (DI7) und ein Ende des sechsten Relais (J6) mit dem A-Ende zusammen verbunden sind, die positive Elektrode der siebten Diode (DI7) und ein Ende des sechsten Relais (J6) mit dem Kollektor des achten Transistors (Q8) zusammen verbunden sind, und der Emitter des achten Transistors (Q8) mit dem N-Ende verbunden ist; und
die Ansteuerschaltung des siebten Schalters (S7) aus einem siebten integrierten Schaltkreis (IC7), einem zweiunddreißigsten Widerstand (R32), einem neunten Transistor (Q9), einer achten Diode (DI8) und einem siebten Relais (J7) besteht, ein Ende des zweiunddreißigsten Widerstands (R32) mit dem dritten Stift des siebten integrierten Schaltkreises (IC7) verbunden ist, das andere Ende des zweiunddreißigsten Widerstands (R32) mit der Basis des neunten Transistors (Q9) verbunden ist, die negative Elektrode der achten Diode (DI8) und ein Ende des siebten Relais (J7) mit dem A-Ende zusammen verbunden sind, die positive Elektrode der achten Diode (DI8) und ein Ende des siebten Relais (J7) mit dem Kollektor des neunten Transistors (Q9) zusammen verbunden sind, und der Emitter des neunten Transistors (Q9) mit dem N-Ende verbunden ist.

4. Induktive Stromversorgung einer vorgeschalteten LED-Lampe nach Anspruch 1 oder 2 **dadurch gekennzeichnet, dass** der fünfte Schalter (S5) ein elektronischer Schalter ist, der elektronische Schalter aus einem sechsten Thyristor (T6), einem Ausgangsende eines vierten Optokopplers (OE4), einem sechsunddreißigsten Widerstand (R36) und einem siebenunddreißigsten Widerstand (R37) besteht, die T2-Elektrode des sechsten Thyristors (T6) und ein Ende des sechsunddreißigsten Widerstands (R36) mit einem Ende des achten Kondensators (C8) verbunden ist, das andere Ende des sechsunddreißigsten Widerstands (R36) mit einem Ende des Ausgangsendes des vierten Optokopplers (E4) verbunden ist, das andere Ende des Ausgangsendes des vierten Optokopplers (E4) mit einer G-Elektrode des sechsten Thyristors (T6) und mit einem Ende des siebenunddreißigsten Widerstands (R37) verbunden ist, und das andere Ende des siebenunddreißigsten Widerstands (R37) und das T1-Ende des sechsten Thyristors (T6) mit dem N-Ende zusammen verbunden sind;
eine Ansteuerschaltung zur Ansteuerung der Zustandsumwandlung des elektronischen Schalters mit den Ausgangsenden, nämlich dem A-Ende und dem N-Ende der Gleichstromversorgungsschaltung verbunden ist, die Ansteuerschaltung des elektronischen Schalters aus dem fünften integrierten Schaltkreis (IC5), einem dreißigsten Widerstand (R30), dem siebten Transistor (Q7), einem dreiunddreißigsten Widerstand (R33) und einem Eingangsende eines vierten Optokopplers (IE4) besteht, ein Ende des dreißigsten Widerstands (R30) mit dem dritten Stift des fünften integrierten Schaltkreises (IC5) verbunden ist, das andere Ende des dreißigsten Widerstands (R30) mit der Basis des siebten Transistors (Q7) verbunden ist, der Emitter des siebten Transistors (Q7) mit dem N-Ende verbunden ist, der Kollektor des siebten Transistors (Q7) mit der negativen Elektrode des Eingangsendes des vierten Optokopplers (IE4) verbunden ist, die positive Elektrode des Eingangsendes des vierten Optokopplers (IE4) mit einem Ende des dreiunddreißigsten Widerstand (R33) verbunden ist, und das andere Ende des dreiunddreißigsten Widerstands (R33) mit dem A-Ende verbunden ist;
der sechste Schalter (S6) ein elektronischer Schalter ist, der elektronische Schalter aus einem siebten Thyristor (T2), einem Ausgangsende eines fünften Optokopplers (OE5), einem achtunddreißigsten Widerstand (R38) und einem neununddreißigsten Widerstand (R39) besteht, eine T2-Elektrode des siebten Thyristors (T7) und ein Ende des achtunddreißigsten Widerstands (R38) mit einem Ende des neunten Kondensators (C8) verbunden ist, das andere Ende des achtunddreißigsten Widerstands (R38) mit einem Ende des Ausgangsendes des fünften Optokopplers (E5) verbunden ist, das andere Ende des Ausgangsendes des fünften Optokopplers (E5) mit der G-Elektrode des siebten Thyristors (T7) und mit einem Ende des neununddreißigsten Widerstands (R39) verbunden ist, und das andere Ende des neununddreißigsten Widerstands (R39) und das T1-Ende des siebten Thyristors (T2) mit dem N-Ende zusammen verbunden sind;
eine Ansteuerschaltung zur Ansteuerung der Zustandsumwandlung des elektronischen Schalters mit den Ausgangsenden, nämlich dem A-Ende und dem N-Ende der Gleichstromversorgungsschaltung verbunden ist, die Ansteuerschaltung des elektronischen Schalters aus einem sechsten integrierten Schaltkreis (IC6), einem einunddreißigsten Widerstand (R31), einem achten Transistor (Q8), einem vierunddreißigsten Widerstand (R34) und einem Eingangsende eines fünften Optokopplers (IE5) besteht, ein Ende des einunddreißigsten Widerstands (R31) mit dem dritten Stift des sechsten integrierten Schaltkreises (IC6) verbunden ist, das andere Ende des einunddreißigsten Widerstands (R31) mit der Basis des achten Transistors (Q8) verbunden ist, der Emitter des achten Transistors (Q8) mit dem N-Ende verbunden ist, der Kollektor des achten Transistors (Q8) mit der negativen Elektrode des Eingangsendes des fünften Optokopplers (IE5) verbunden ist, die positive Elektrode des Eingangsendes des fünften Optokopplers (IE5) mit einem Ende des vierunddreißigsten Widerstand (R34) verbunden ist, und das andere Ende des vierunddreißigsten Widerstands (R34) mit dem A-Ende verbunden ist;
der siebte Schalter (S7) ein elektronischer Schalter ist, der elektronische Schalter aus einem achten Thyristor (T8), einem Ausgangsende eines sechsten Optokopplers (OE6), einem vierzigsten Widerstand (R40) und einem einundvierzigsten Widerstand (R41) besteht, die T2-Elektrode des achten Thyristors (T8) und ein Ende des vierzigsten Widerstands (R40) mit einem Ende des zehnten Kondensators (C10) verbunden ist, das andere Ende des vierzigsten Widerstands (R40) mit einem Ende des Ausgangsendes des sechsten Optokopplers (E6) verbunden ist, das andere Ende des Ausgangsendes des sechsten Optokopplers (OE6) mit der G-Elektrode des achten Thyristors (T8) und mit einem Ende des einundvierzigsten Widerstands (R41) verbunden ist, und das andere Ende des einundvierzigsten Widerstands (R41) und das T1-Ende des achten Thyristors (T8) mit dem N-Ende zusammen verbunden sind;
eine Ansteuerschaltung zur Ansteuerung der Zustandsumwandlung des elektronischen Schalters mit den Ausgangsenden, nämlich dem A-Ende und dem N-Ende der Gleichstromversorgungsschaltung verbunden ist, die elektronische Ansteuerschaltung des elektronischen Schalters aus einem siebten integrierten Schaltkreis (IC7), einem zweiunddreißigsten Widerstand (R32), einem neunten Transistor (Q9), einem fünfunddreißigsten Widerstand (R35) und einem Eingangsende eines sechsten Optokopplers (IE6) besteht, ein Ende des zweiunddreißigsten Widerstands (R32) mit dem dritten Stift des siebten integrierten Schaltkreises (IC7) verbunden ist, das andere Ende des zweiunddreißigsten Widerstands (R32) mit der Basis des neunten Transistors (Q9) verbunden ist, der Emitter des neunten Transistors (Q9) mit dem N-Ende verbunden ist, der Kollektor des neunten Transistors (Q9) mit der negativen Elektrode des Eingangsendes des sechsten Optokopplers (IE6) verbunden ist, die positive Elektrode des Eingangsendes des sechsten Optokopplers (IE6) mit einem Ende des fünfunddreißigsten Widerstand (R35) verbunden ist, und das andere Ende des fünfunddreißigsten Widerstands (R35) mit dem A-Ende verbunden ist.

5. Induktive Stromversorgung einer vorgeschalteten LED-Lampe nach Anspruch 4, wobei die Emitter des siebten Transistors (Q7), des achten Transistors (Q8) und des neunten Transistors (Q9) mit der positiven Elektrode eines neunten Thyristors (T9) und mit einem Ende eines fünfzigsten Widerstands (R50) verbunden sind, das andere Ende des fünfzigsten Widerstands (R50) mit der positiven Elektrode eines dreizehnten Kondensators (C13) und mit der Steuerelektrode des neunten Thyristors (T9) verbunden ist, und die negative Elektrode des dreizehnten Kondensators (C13) und die negative Elektrode des neunten Thyristors (T9) mit N-Ende zusammen verbunden sind.

6. Induktive Stromversorgung einer vorgeschalteten LED-Lampe nach Anspruch 1 oder 2 **dadurch gekennzeichnet, dass** der elfte Kondensator (C11) mit den Eingangsenden, nämlich die D- und N-Enden der Brückengleichrichterschaltung über einen achten Schalter (S8) verbunden ist, ein Ende des siebten Schalters (S7) mit einer zehnten Kondensator (C10) verbunden ist, und das andere Ende des siebten Schalters (S7) mit dem Anschlusspunkt, nämlich einem H-Punkt des elften Kondensators (C11) und des achten Schalters (S8);
die Ansteuerschaltung zur Ansteuerung der Zustandsumwandlung des achten Schalters (S8) mit den Eingangsenden, nämlich den L- und N-Enden der Energieversorgung verbunden ist, die Schaltung aus einem achten integrierten Schaltkreis (IC8), einem zweiundvierzigsten Widerstand (R42), einem dreiundvierzigsten Widerstand (R43), einem vierundvierzigsten Widerstand (R44), einem fünfundvierzigsten Widerstand (R45), einem sechsundvierzigsten Widerstand (R46) einem siebenundvierzigsten Widerstand (R47) einem achtundvierzigsten Widerstand (R48), einem neunundvierzigsten Widerstand (R49), einem zwölfter Kondensator (C12), einer neunten Diode (DI9, einer zehnten Diode (DI10), einem zehnten Thyristor (T10) und einem achten Relais (J8) besteht, ein Ende des zweiundvierzigsten Widerstands (R42) mit dem A-Ende verbunden ist, das andere Ende des zweiundvierzigsten Widerstands (R42) mit dem ersten Stift des achten integrierten Schaltkreises (IC8), mit einem Ende des dreiundvierzigsten Widerstands (R43), mit einem Ende des vierundvierzigsten Widerstands (R44) und mit einem Ende des fünfundvierzigsten Widerstands (R45) verbunden ist, das andere Ende des dreiundvierzigsten Widerstands (R43) mit dem zweiten Stift des achten integrierten Schaltkreises (IC8) verbunden ist, das andere Ende des vierundvierzigsten Widerstands (R44) mit dem dritten Stift des achten integrierten Schaltkreises (IC8) verbunden ist , das andere Ende des fünfundvierzigsten Widerstands (R45) mit dem vierten Stift des achten integrierten Schaltkreises (IC8) verbunden ist, die neunte Diode (DI9), der achtundvierzigsten Widerstand (R48) und der neunundvierzigste Widerstand (R49) sequenziell hintereinander geschaltet sind und mit dem L-Ende und dem N-Ende verbunden sind, die Anschlussstelle des achtundvierzigsten Widerstands (R48) und des neunundvierzigsten Widerstands (R49) mit dem fünften Stift des achten integrierten Schaltkreises (IC8) verbunden ist, ein Ende des sechsundvierzigsten Widerstand (R46), eine Ende des siebenundvierzigsten Widerstand (R47) und ein Ende des zwölften Kondensators (C12) mit der Steuerelektrode des zehnten Thyristors (T10) verbunden sind, das andere Ende des sechsundvierzigsten Widerstands (R46) mit dem siebten Stift des achten integrierten Schaltkreises (IC8) verbunden ist, das andere Ende des siebenundvierzigsten Widerstands (R47), das andere Ende des zwölfter Kondensators (C12) und die negative Elektrode des zehnten Thyristors (T10) mit dem N-Ende verbunden sind, nachdem die zehnte Diode (DI10) und das achte Relais (J8) miteinander parallel verbunden sind, die Anschlussstelle der negativen Elektrode der zehnten Diode (DI10) mit dem L-Ende verbunden wird, und die Anschlussstelle der positiven Elektrode der zehnten Diode (DI10) mit dem positivem Elektrode des zehnten Thyristors (T10) verbunden wird.

## Revendications

1. Bloc d'alimentation inductif d'attaque pour lampe à DEL à puissance variable et à économie d'énergie, ledit bloc d'alimentation inductif d'attaque comprenant un ballast inductif (Lz) et un circuit à pont redresseur comprenant des extrémités d'entrée, c'est-à-dire les extrémités D et N, ledit circuit à pont redresseur étant connecté auxdites extrémités d'entrée vers une extrémité de sortie du ballast inductif (Lz), où le bloc d'alimentation d'attaque comprend en outre un circuit d'alimentation en courant continu présentant une extrémité A et une extrémité N et destiné à alimenter un circuit de commande en énergie électrique, **caractérisé en ce qu'**un onzième condensateur (C11) est connecté auxdites extrémités d'entrée, c'est-à-dire aux extrémités D et N du circuit à pont redresseur; un circuit en série d'un huitième condensateur (C8) et d'un cinquième commutateur (S5), un circuit en série d'un neuvième condensateur (C9) et d'un sixième commutateur (S6), un circuit en série d'un dixième condensateur (C10) et d'un septième commutateur (S7) sont en outre connectés aux extrémités d'entrée, c'est-à-dire aux extrémités D et N du circuit à pont redresseur; et un circuit d'attaque pour attaquer la conversion d'état du cinquième commutateur (S5), un circuit d'attaque du sixième commutateur (S6) et un circuit d'attaque du septième commutateur (S7) sont connectés à des extrémités de sortie, c'est-à-dire aux extrémités A et N du circuit d'alimentation en courant continu.

2. Bloc d'alimentation inductif d'attaque selon la revendication 1, dans lequel le ballast inductif (Lz) est un ballast inductif présentant une plage d'impédances supérieures à 52 ohms et inférieures à 360 ohms.

3. Bloc d'alimentation inductif d'attaque pour lampe à DEL selon les revendications 1 ou 2, **caractérisé en ce que** les points de connexion, c'est-à-dire des points P du huitième condensateur (C8), du neuvième condensateur (C9) et du dixième condensateur (C10) sont connectés à l'extrémité D par l'intermédiaire d'une vingt-neuvième résistance (R29);
le circuit d'attaque apte à attaquer la conversion d'état du cinquième commutateur (S5) est composé d'un cinquième circuit intégré (IC5), d'une trentième résistance(R30), d'un septième transistor (Q7), d'une sixième diode (DI6) et d'un cinquième relais (J5), une extrémité de la trentième résistance (R30) est connectée à la troisième broche du cinquième circuit intégré (IC5), l'autre extrémité de la trentième résistance (R30) est connectée à la base du septième transistor (Q7), l'électrode négative de la sixième diode (DI6) et une extrémité du cinquième relais (J5) sont connectées ensemble à l'extrémité A, l'électrode positive de la sixième diode (DI6) et une extrémité du cinquième relais (J5) sont connectées ensemble au collecteur du septième transistor (Q7), et l'émetteur du septième transistor (Q7) est connecté à l'extrémité N;
le circuit d'attaque du sixième commutateur (S6) est composé d'un sixième circuit intégré (IC6), d'une trente-et-unième résistance (R31), d'un huitième transistor (Q8), d'une septième diode (DI7) et d'un sixième relais (J6), une extrémité de la trente-et-unième résistance (R31) est connectée à la troisième broche du sixième circuit intégré (IC6), l'autre extrémité de la trente-et-unième résistance (R31) est connectée à la base du huitième transistor (Q8), l'électrode négative de la septième diode (DI7) et une extrémité du sixième relais (J6) sont connectées ensemble à l'extrémité A, l'électrode positive de la septième diode (DI7) et une extrémité du sixième relais (J6) sont connectées ensemble au collecteur du huitième transistor (Q8), et l'émetteur du huitième transistor (Q8) est connecté à l'extrémité N; et
le circuit d'attaque du septième commutateur (S7) est composé d'un septième circuit intégré (IC7), d'une trente-deuxième résistance (R32), d'un neuvième transistor (Q9), d'une huitième diode (DI8) et d'un septième relais (J7), une extrémité de la trente-deuxième résistance (R32) est connectée à la troisième broche du septième circuit intégré (IC7), l'autre extrémité de la trente-deuxième résistance (R32) est connectée à la base du neuvième transistor (Q9), l'électrode négative de la huitième diode (DI8) et une extrémité du septième relais (J7) sont connectées ensemble à l'extrémité A, l'électrode positive de la huitième diode (DI8) et une extrémité du septième relais (J7) sont connectées ensemble au collecteur du neuvième transistor (Q9), et l'émetteur du neuvième transistor (Q9) est connecté à l'extrémité N.

4. Bloc d'alimentation inductif d'attaque pour lampe à DEL selon les revendications 1 ou 2, **caractérisé en ce que** le cinquième commutateur (S5) est un commutateur électronique, le commutateur électronique est composé d'un sixième thyristor (T6), une extrémité de sortie de quatrième optocoupleur (OE4), une trente-sixième résistance (R36) et une trente-septième résistance (R37), l'électrode T2 du sixième thyristor (T6) et une extrémité de la trente-sixième résistance (R36) sont connectées à une extrémité du huitième condensateur (C8), l'autre extrémité de la trente-sixième résistance (R36) est connectée à une extrémité de sortie de quatrième optocoupleur (E4), l'autre extrémité de sortie de quatrième optocoupleur (E4) est connectée à une électrode G du sixième thyristor (T6) et à une extrémité de la trente-septième résistance (R37), et l'autre extrémité de la trente-septième résistance (R37) et l'extrémité T1 du sixième thyristor (T6) sont connectées ensemble à l'extrémité N;
un circuit d'attaque apte à attaquer la conversion d'état du commutateur électronique est connecté aux extrémités de sortie, c'est-à-dire à l'extrémité A et à l'extrémité N du circuit d'alimentation en courant continu, le circuit d'attaque du commutateur électronique est composé du cinquième circuit intégré (IC5), d'une trentième résistance (R30), du septième transistor (Q7), d'une trente-troisième résistance (R33) et d'une extrémité d'entrée de quatrième optocoupleur (IE4), une extrémité de la trentième résistance(R30) est connectée à la troisième broche du cinquième circuit intégré (IC5), l'autre extrémité de la trentième résistance (R30) est connectée à la base du septième transistor (Q7), l'émetteur du septième transistor (Q7) est connecté à l'extrémité N, le collecteur du septième transistor (Q7) est connecté à l'électrode négative de l'extrémité d'entrée de quatrième optocoupleur (IE4), l'électrode positive de l'extrémité d'entrée de quatrième optocoupleur (IE4) est connectée à une extrémité de la trente-troisième résistance (R33), et l'autre extrémité de la trente-troisième résistance (R33) est connectée à l'extrémité A; le sixième commutateur (S6) est un commutateur électronique, le commutateur électronique est composé d'un septième thyristor (T2), d'une extrémité de sortie de cinquième optocoupleur (OE5), d'une trente-huitième résistance (R38) et d'une trente-neuvième résistance (R39), une électrode T2 du septième thyristor (T2) et une extrémité de la trente-huitième résistance (R38) sont connectées à une extrémité du neuvième condensateur (C9), l'autre extrémité de la trente-huitième résistance (R38) est connectée à une extrémité de l'extrémité de sortie de cinquième optocoupleur (OE5), l'autre extrémité de l'extrémité de sortie de cinquième optocoupleur (OE5) est connectée à l'électrode G du septième thyristor (T2) et à une extrémité de la trente-neuvième résistance (R39), et l'autre extrémité de la trente-neuvième résistance (R39) et l'électrode T1 du septième thyristor (T2) sont connectées ensemble à l'extrémité N;
un circuit d'attaque apte à attaquer la conversion d'état du commutateur électronique est connecté aux extrémités de sortie, c'est-à-dire à l'extrémité A et à l'extrémité N du circuit d'alimentation en courant continu, le circuit d'attaque du commutateur électronique est composé d'un sixième circuit intégré (IC6), d'une trente-et-unième résistance (R31), d'un huitième transistor (Q8), d'une trente-quatrième résistance (R34) et d'une extrémité d'entrée de cinquième optocoupleur (IE5), une extrémité de la trente-et-unième résistance (R31) est connectée à la troisième broche du sixième circuit intégré (IC5), l'autre extrémité de la trente-et-unième résistance(R31) est connectée à la base du huitième transistor (Q8), l'émetteur du huitième transistor (Q8) est connecté à l'extrémité N, le collecteur du huitième transistor (Q8) est connecté à l'électrode négative de l'extrémité d'entrée de cinquième optocoupleur (IE5), l'électrode positive de l'extrémité d'entrée de cinquième optocoupleur (IE5) est connectée à une extrémité de la trente-quatrième résistance (R34), et l'autre extrémité de la trente-quatrième résistance (R34) est connectée à l'extrémité A; le septième commutateur (S7) est un commutateur électronique, le commutateur électronique est composé d'un huitième thyristor (T8), d'une extrémité de sortie de sixième optocoupleur (OE6), d'une quarantième résistance (R40) et d'une quarante-et-unième résistance (R41), l'électrode T2 du huitième thyristor (T8) et une extrémité de la quarantième résistance (R40) sont connectées à une extrémité du dixième condensateur (C10), l'autre extrémité de la quarantième résistance (R40) est connectée à une extrémité de l'extrémité de sortie de sixième optocoupleur (OE6), l'autre extrémité de l'extrémité de sortie de sixième optocoupleur (OE6) est connectée à l'électrode G du huitième thyristor (T8) et à une extrémité de la quarante-et-unième résistance (R41), l'autre extrémité de la quarante-et-unième résistance (R41) et l'électrode T1 du huitième thyristor (T8) sont connectées ensemble à l'extrémité N; et
un circuit d'attaque apte à attaquer la conversion d'état du commutateur électronique est connecté aux extrémités de sortie, c'est-à-dire à l'extrémité A et à l'extrémité N du circuit d'alimentation en courant continu, le circuit d'attaque électronique du commutateur électronique est composé d'un septième circuit intégré (IC7), d'une trente-deuxième résistance (R32), d'un neuvième transistor (Q9), d'une trente-cinquième résistance (R35) et d'une extrémité d'entrée de sixième optocoupleur (IE6), une extrémité de la trente-deuxième résistance (R32) est connectée à la troisième broche du septième circuit intégré (IC7), l'autre extrémité de la trente-deuxième résistance (R32) est connectée à la base du huitième transistor (Q8), l'émetteur du neuvième transistor (Q9) est connecté à l'extrémité N, le collecteur du neuvième transistor (Q9) est connecté à l'électrode négative de l'extrémité d'entrée de sixième optocoupleur (IE6), l'électrode positive de l'extrémité d'entrée de sixième optocoupleur (IE6) est connectée à une extrémité de la trente-cinquième résistance (R35), et l'autre extrémité de la trente-cinquième résistance (R35) est connectée à l'extrémité A.

5. Bloc d'alimentation inductif d'attaque pour lampe DEL selon la revendication 4, dans lequel les émetteurs du septième transistor (Q7), du huitième transistor (Q8) et du neuvième transistor (Q9) sont connectés à l'électrode positive d'un neuvième thyristor (T9) et à une extrémité d'une cinquantième résistance (R50), l'autre extrémité de la cinquantième résistance (R50) est connectée à l'électrode positive d'un treizième condensateur (C13) et à l'électrode de commande du neuvième thyristor (T9), et l'électrode négative du treizième condensateur (C13) et l'électrode négative du neuvième thyristor (T9) sont connectées ensemble à l'extrémité N.

6. Bloc d'alimentation inductif d'attaque pour lampe DEL selon les revendications 1 ou 2, **caractérisé en ce que** le onzième condensateur (C11) est connecté aux extrémités d'entrée, c'est-à-dire aux extrémités D et N du circuit à pont redresseur par l'intermédiaire d'un huitième commutateur (S8), une extrémité du septième commutateur (S7) est connectée à un dixième condensateur (C10), et l'autre extrémité du septième commutateur (S7) est connectée au point de connexion, c'st-à-dire à un point H du onzième condensateur (C11) et du huitième commutateur (S8);
un circuit d'attaque apte à attaquer la conversion d'état du huitième commutateur (S8) est connecté aux extrémités d'entrée, c'est-à-dire aux extrémités L et N de l'alimentation en énergie électrique, le circuit est composé d'un huitième circuit intégré (IC8), d'une quarante-deuxième résistance (R42), d'une quarante-troisième résistance (R43), d'une quarante-quatrième résistance (R44), d'une quarante-cinquième résistance (R45), d'une quarante-sixième résistance (R46), d'une quarante-septième résistance (R47), d'une quarante-huitième résistance (R48), d'une quarante-neuvième résistance (R49), d'un douzième condensateur (C12), d'une neuvième diode (DI9), d'une dixième diode (DI10), d'un dixième thyristor (T10) et d'un huitième relais (J8), une extrémité de la quarante-deuxième résistance (R42) est connectée à l'extrémité A, l'autre extrémité de la quarante-deuxième résistance (R42) est connectée à la première broche du huitième circuit intégré (IC8), à une extrémité de la quarante-troisième résistance (R43), à une extrémité de la quarante-quatrième résistance (R44) et à une extrémité de la quarante-cinquième résistance (R45), l'autre extrémité de la quarante-troisième résistance (R43) est connectée à la deuxième broche du huitième circuit intégré (IC8), l'autre extrémité de la quarante-quatrième résistance (R44) est connectée à la troisième broche du huitième circuit intégré (IC8), l'autre extrémité de la quarante-cinquième résistance (R45) est connectée à la quatrième broche du huitième circuit intégré (IC8), la neuvième diode (DI9), la quarante-huitième résistance (R48) et la quarante-neuvième résistance (R49) sont connectées séquentiellement en série à l'extrémité L et à l'extrémité N, l'endroit de connexion de la quarante-huitième résistance (R48) et de la quarante-neuvième résistance (R49) est connecté à la cinquième broche du huitième circuit intégré (IC8), une extrémité de la quarante-sixième résistance (R46), une extrémité de la quarante-septième résistance (R47) et une extrémité du douzième condensateur (C12) sont connectées à l'électrode de commande du dixième thyristor (T10), l'autre extrémité de la quarante-sixième résistance (R46) est connectée à la septième broche du huitième circuit intégré (IC8), l'autre extrémité de la quarante-septième résistance (R47), l'autre extrémité du douzième condensateur (C12) et l'électrode négative du dixième thyristor (T10) sont connectées à l'extrémité N, après que la dixième diode (DI10) et le huitième relais (J8) ont été connectés l'un à l'autre en parallèle, le point de connexion d'électrode négative de la dixième diode (DI10) est connecté à l'extrémité L, et le point de connexion d'électrode positive de la dixième diode (DI10) est connecté à l'électrode positive du dixième thyristor (T10).
